(19) Europäisches Patentamt

European Patent Office

Office européen des brevets

(11) EP 1 708 136 A1

(12) EUROPEAN PATENT APPLICATION
published in accordance with Art. 158(3) EPC

(43) Date of publication:
04.10.2006 Bulletin 2006/40

(51) Int Cl.:
G06T 3/00 (2006.01)    H04N 5/225 (2006.01)
H04N 101/00 (2006.01)

(21) Application number: 05703528.9

(22) Date of filing: 13.01.2005

(86) International application number:
PCT/JP2005/000289

(87) International publication number:
WO 2005/069216 (28.07.2005 Gazette 2005/30)

(84) Designated Contracting States:
DE FR GB

(30) Priority: 15.01.2004  JP 2004008056
30.01.2004  JP 2004023349

(71) Applicant: MATSUSHITA ELECTRIC INDUSTRIAL
CO., LTD.
Osaka 571-8501 (JP)

(72) Inventors:
• ARAKI, Nobuhiro
c/o Matsushita El. Ind. Co., Ltd.
Chuo-ku, Osaka-shi, Osaka 540-6319 (JP)
• WARAGAI, Katsunori
c/o Matsushita El. Ind. Co, Ltd
Chuo-ku, Osaka-shi, Osaka 540-6319 (JP)

(74) Representative: Balsters, Robert et al
Novagraaf SA
25, Avenue du Pailly
1220 Les Avanchets - Geneva (CH)

(54) MEASURING METHOD FOR OPTICAL TRANSFER FUNCTION, IMAGE RESTORING METHOD, AND DIGITAL IMAGING DEVICE

(57) In an measuring method for optical transfer function of the invention, irradiating-light from a light source (31) scans an element to be measured within an image sensor of an imaging camera constituted by integrating an imaging optical system and the image sensor. The element to be measured converts sequentially the irradiating-light into an electrical signal and outputs the electrical signal. Further, based on the outputted electrical signal, point spread function data is generated, and subjected to Fourier transform to calculate an optical transfer function. Accordingly, a method is provided for measuring an optical transfer function for properly restoring image degradation due to factors including the position of the imaging optical system within the imaging camera and inter-element cross talk.

FIG. 1

**Description**

Technical Field

The present invention relates to a measuring method for optical transfer function used to correct an image created with an imaging camera to obtain an image close to the original image, and an image restoring method.

Background Art

In recent years, the configuration of imaging cameras has been miniaturized and thickness-reduced. Accordingly, the overall length of imaging optical systems has been shortened, and the number of constituent lenses has also been reduced. In such miniaturized and thickness-reduced imaging cameras, the image is degraded due to lens aberration and the like, and thus it is difficult to improve the resolution performance of imaging optical systems. In conventional miniaturized and thickness-reduced imaging cameras, the resolution of image sensors has been raised, but the resolution performance of imaging optical systems has not been improved. Consequently, high-quality images corresponding to the improvement of image sensor resolution cannot be achieved.

As a technique for restoring a degraded image to one close to the original image, there has hitherto be known a technique of applying a deconvolution processing to a degraded image by use of an optical transfer function specific to the imaging optical system of the imaging camera and thereby obtaining a restored image. The deconvolution processing has been disclosed, for example, in Japanese Patent Laid-Open Nos. 2002-24816, 2000-206446, and the like. In conventional art, optical parts, such as a lens, used in an imaging camera are placed in a measurement apparatus. On the projection area of the measurement apparatus, there is projected a pattern having spatial frequencies that are equal to or greater than the element pitch of the image sensor, whereby MTF (Modulation Transfer Function) is measured. The measured MTF measurement value is used as the optical transfer function. In the deconvolution processing, a convolution integration of a degraded image having blurriness ascribable to the imaging optical system performance with the optical transfer function being image degrading factor information is performed. The deconvolution processing restores the degraded image into a high-contrast image close to the original image.

However, as the resolution of imaging apparatuses is raised, the number of elements constituting the imaging area increases and at the same time, the size of each element is reduced. Thus, as a factor of image degradation, the image sensor crosstalk increases and reaches a nonnegligible level. In the above described conventional measuring method for optical transfer functions, only the imaging optical system of an imaging camera is placed on the measurement apparatus to measure an MTF. In the conventional image restoring methods , MTF indicating only the degradation factor ascribable to the imaging optical system of an imaging camera is calculated, and the calculated MTF is used as the optical transfer function; the image sensor crosstalk is not considered as a factor of image degradation. When the imaging optical system is actually installed in the imaging camera, due to the positional relationship between the imaging optical system and the image sensor, the focus state may be different from that when the imaging optical system is placed in the measurement apparatus. As described above, due to a factor different from one when an optical transfer function is measured, the image captured with the actual imaging camera may be degraded. Consequently, it may be impossible to restore the image with fidelity by performing a deconvolution processing using the optical transfer function calculated by the above described method.

Further, in the conventional measuring method for optical transfer functions, the imaging optical system must be taken out from the imaging camera and then placed in the measurement apparatus. In order to obtain optical transfer functions, disassembly and reassembly of the imaging camera is needed. Accordingly, the optical transfer function measurement is not easy to perform.

The amount of calculation required to correct an image by a deconvolution processing is proportional to the power of the number of pixels of the image to be corrected (correction subject image). As the number of pixels of the digital imaging device becomes large, the processing load of deconvolution processing increases. When the processing load increases, the digital imaging device requires a high-speed CPU and a high-capacity memory, and at the same time consumes more power. When the digital imaging device is a portable apparatus driven by a battery, the increase of power consumption poses a problem.

To solve the problem of conventional art, the present invention has been achieved, and has an object to provide an measuring method for optical transfer function capable of easily generating an optical transfer functions for restoring the original image with fidelity. Another object of the present invention is to provide an image correction method for correcting an image captured with a digital imaging device without increasing the processing load of the digital imaging device.

Disclosure of the Invention

In an aspect of the present invention, a measuring method for optical transfer function comprises, a scanning step of irradiating irradiating-light froma light source and allowing the irradiating-light to scan an element to be measured, wherein the element to be measured is an element within an image sensor of an imaging camera constituted by integrating an imaging optical system and the image sensor; a photoelectric conversion step of converting sequentially the irradiating-light into an electrical signal by the element to be measured along with scanning of the element in the scanning step and then outputting the electrical signal; and a calculation step of calculating an optical transfer function based on the electrical signals outputted in the photoelectric conversion step, wherein the optical transfer function is used to perform a restoration for degradation of an image generated by use of the imaging camera by a deconvolution processing.

According to this configuration, the imaging optical system and the image sensor actually arranged in an imaging camera is used to calculate an optical transfer functions. Accordingly, it is possible to calculate an optical transfer functions reflecting the image degradation factor occurring in the imaging optical system and the image degradation factor ascribable to inter-element crosstalk. Also, the elements constituting the imaging area of an imaging camera are scanned by light incident through the imaging optical system arranged in the imaging camera, and optical transfer functions are calculated based on an image obtained by performing the scanning. Accordingly, optical transfer functions can easily be calculated without dismantling the imaging camera.

In another aspect of the invention, in the calculation step, the optical transfer function of the elements to be measured may be calculated based on the spread function data which is generated with scanning by the irradiating-light in the scanning step and which indicates a distribution of the electrical signal obtained by performing conversion in the elements to be measured.

According to this configuration, spread function data is generated for each element to be measured. When the degree of image degradation varies according to the position of an element to be measured within the image sensor, optical transfer functions varying depending on the position can be measured.

In another aspect of the invention, in the scanning step, the irradiating-light producing a point-like projection image on an imaging area may be irradiated under a conjugation condition such that the diameter of a paraxial image of the irradiating-light on the imaging area is equal to or smaller than half a pitch of the element; and in the calculation step, the optical transfer function may be calculated based on the point spread function data which is generated as the spread function data.

According to this configuration, point spread function data of an element to be measured is obtained, and an optical transfer function can be calculated based on the point spread function data.

In another aspect of the invention, in the scanning step, the irradiating-light producing a linear projection image on an imaging area may be irradiated under a conjugation condition such that the width of a paraxial image of the irradiating-light on the imaging area is equal to or smaller than half a pitch of the element; and in the calculation step, the optical transfer function may be calculated based on the line spread function data which is generated as the spread function data.

According to this configuration, line spread function data of an element to be measured is obtained, and an optical transfer function can be calculated based on the line spread function data. Also, by using irradiation light producing a linear projection image on the imaging area, the line spread function data of a plurality of elements to be measured can be simultaneously measured. Consequently, optical transfer functions of a larger number of elements to be measured can be calculated.

In another aspect of the invention, in the scanning step, the irradiating-light may scan a plurality of the elements to be measured; and the calculation step may comprise a processing of performing an interpolation by using the optical transfer functions of a plurality of the elements to be measured and thereby calculating an optical transfer function of an element other than the elements to be measured.

According to this configuration, the load of the processing for calculating spread function data and the load of the processing for generating optical transfer functions from the spread function data are reduced, thus making it possible to shorten the time requited to measure optical transfer functions. Also, by performing an interpolation processing using the spread function data of a plurality of elements to be measured, the optical transfer functions of the other elements are calculated. Accordingly, even when the degree of image degradation varies according to the position within the image sensor, an optical transfer function reflecting such ununiformity can be obtained with respect to all elements of the image sensor.

In another aspect of the invention, the measuring method may further comprise a distortion characteristic data generation step generating distortion characteristic data relating to image distortion on the imaging area by using the spread function data and position information of the element to be measured corresponding to the spread function data.

According to this configuration, data for correcting not only the image degradation ascribable to the limits of resolution performance of the imaging optical system but also the image distortion ascribable to the imaging optical system can be generated.

In another aspect of the invention, the scanning step may comprise a step of changing at least one of irradiating angle and irradiating position of the irradiating-light in the imaging camera so that the irradiating-light scans the element to be measured.

According to this configuration, while the imaging camera is in a fixed state, scanning can be performed with irradiating-light.

In another aspect of the invention, the scanning step may comprise a step of changing at least one of angle and position of the imaging camera so that the irradiating-light scans the element to be measured.

According to this configuration, by allowing irradiating-light to move relative to the imaging area, scanning can be performed with the irradiating-light.

In another aspect of the invention, an image restoring method comprises a step of measuring an optical transfer function by measuring methods described above and a step of applying a restoration processing to image data obtained by the imaging camera by use of the measured optical transfer function.

Accordingly, a high-resolution restored image can be obtained.

In another aspect of the invention, a portable telephone apparatus or a digital imaging device comprises an imaging camera capturing an image of an object and generating image data; storage means for storing an optical transfer function; and, transmission means for transmitting as a set of data the optical transfer function stored in the storage means and the image data generated by the imaging camera; wherein the optical transfer funct ion is measured by a measuring method comprising : a scanning step of irradiating irradiating-light from a light source, and allowing the irradiating-light to scan an element to be measured within an image sensor of the imaging camera, wherein the image sensor of the imaging camera is integrated with an imaging optical system; a photoelectric conversion step of converting sequentially the irradiating-light performing scanning in the scanning step into an electrical signal by the element to be measured and then outputting the electrical signal; and a calculation step of calculating the optical transfer function based on the electrical signals outputted in the photoelectric conversion step, wherein the optical transfer function is used to perform a restoration for degradation of an image generated by the imaging camera by a deconvolution processing.

According to this configuration, the optical transfer functions measured by the above described measuring method and the image data of an object are transmitted as a set of data. Thus the recipient can easily perform an image data restoring processing by using the transmitted optical transfer functions.

In another aspect of the invention, a portable telephone apparatus or a digital imaging device comprises an imaging camera capturing an image of an object and generating image data; tag generation means for attaching to the image data generated by the imaging camera a file number of a data file containing an optical transfer functionmeasured by a measuring method comprising: a scanning step of irradiating irradiating-light from a light source, and allowing the irradiating-light to scan an element to be measured within an image sensor of the imaging camera, wherein the image sensor of the imaging camera is integrated with an imaging optical system; a photoelectric conversion step of converting sequentially the irradiating-light scanning the element in the scanning step into an electrical signal by the element to be measured and then outputting the electrical signal; and a calculation step of calculating an optical transfer function based on the electrical signal outputted in the photoelectric conversion step, wherein the optical transfer function is used to perform a restoration for degradation of an image generated by the imaging camera by a deconvolution processing.

According to this configuration, the file number tag of a data file containing the optical transfer functions is attached to image data. Thus even when the image data with tag is transmitted to an external device such as an image correction apparatus, the optical transfer functions corresponding to the image can be correctly selected from among mixed files of the external device to perform an image data restoring processing.

In another aspect of the invention, an image correction method comprises a step of associating an image generated by causing a digital imaging device to perform image-capturing of an object with degradation factor information for correcting the image degraded due to imaging means of the digital imaging device, and outputting the associated information from the digital imaging device; and a step of causing an image correction server apparatus to apply a deconvolution processing to the image outputted from the digital imaging device by use of the degradation factor information associated with the image.

According to this configuration, all that the digital imaging device performs is to associate the degradation factor information for correcting the image degraded due to the imaging means, with the image created with the imaging means, and output the information; the deconvolution processing is performed by the image correction server apparatus. Thus an image corrected by the deconvolution processing can be obtained without increasing the processing load of the digital imaging device.

In another aspect of the invention, a digital imaging device comprises imaging means for capturing and generating an image of an object; degradation factor information storage means for storing degradation factor information for correcting the image degraded due to the imaging means; and output means for outputting the degradation factor information associated with the image.

According to this configuration, a correction subject image and degradation factor information associated with each other are outputted from the digital imaging device. Accordingly, the correction subject image can be corrected in an external apparatus, and a corrected image can be obtained without increasing the processing load of the digital imaging device.

In another aspect of the invention, the digital imaging device may further comprise receiving means for receiving a corrected image obtained by correcting the image using the degradation factor information outputted from the output means.

According to this configuration, the receiving means receives a corrected image. Accordingly, a corrected image can be obtained by the digital imaging device without increasing the processing load of the digital imaging device.

In another aspect of the invention, the degradation factor information storage means may store as the degradation factor information an optical transfer function used in a deconvolution processing.

According to this configuration, a deconvolution processing can be performed in an external apparatus by use of an optical transfer function stored in the degradation factor information storage means.

In another aspect of the invention, the output means may be transmission means for transmitting the degradation factor information associated with the image.

According to this configuration, the transmission means can be used to transmit a correction subject image and degradation factor information to an apparatus for performing a deconvolution processing.

In another aspect of the invention, the output means may be writing means for writing the degradation factor information associated with the image into a recording medium associated with the image.

According to this configuration, a correction subject image and degradation factor information can be read from the recording medium in an apparatus for performing a deconvolution processing.

In another aspect of the invention, an image correction server apparatus comprises receiving means for receiving from a digital imaging device an image generated by causing the digital imaging device to perform image-capturing of an object and degradation factor information for correcting the image degraded due to imaging means of the digital imaging device; image correction means for applying a deconvolution processing to the image using the degradation factor information; and transmission means for transmitting a corrected image obtained by performing the deconvolution processing.

According to this configuration, degradation factor information varying according to individual digital imaging device and an image captured with the digital imaging device can be obtained as a set of data, and correction can thus be properly performed. Also, a deconvolution processing is performed in the image correction server apparatus, and thus a corrected image can be obtained by use of the deconvolution processing without increasing the processing load of the digital imaging device.

In another aspect of the invention, the receiving means may receive transmission destination information specifying a transmission destination of the corrected image together with the image and the degradation factor information; the transmission means may transmit the corrected image to a transmission destination specified by the transmission destination information.

According to this configuration, without increasing the processing load of the digital imaging device, an image obtained by causing the digital imaging device to perform image-capturing can be corrected by a deconvolution processing and transmitted to any given transmission destination.

In another aspect of the invention, an image correction system comprises a digital imaging device and an image correction server apparatus, wherein: the digital imaging device comprises imaging means for capturing and generating an image of an object, specifying means for specifying a transmission destination of a corrected image, and transmission means for transmitting destination information associated with the image generated by the imaging means to the image correction server apparatus, wherein the transmission destination information indicates the transmission destination specified by use of the specifying means and transmitting the associated information; and the image correction server apparatus comprises image correction means for applying a deconvolution processing to the image outputted from the digital imaging device to obtain the corrected image and transmission means for transmitting the corrected image obtained by use of the image correction means to a transmission destination indicated by the transmission destination information associated with the image.

According to this configuration, an image obtained by causing the digital imaging device to perform image-capturing can be corrected by a deconvolution processing without increasing the processing load of the digital imaging device and transmitted to any given transmission destination.

In another aspect of the invention, a program for allowing a computer to execute an image correction method comprises a step of accepting input of a data file containing an image generated by causing a digital imaging device to perform image-capturing of an object and degradation factor information for correcting the image degraded due to imaging means of the digital imaging device; and an image correction step of applying a deconvolution processing to the image contained in the data file outputted from the digital imaging device by using the degradation factor information contained in the data file with the image.

According to this configuration, all that a digital imaging device performs is to output an image created by the imaging means and degradation factor information for correcting the image degraded due to the imaging means; the deconvolution processing is performed in the image correction server apparatus. Thus an image corrected by the deconvolution processing can be obtained without increasing the processing load of the digital imaging device.

According to the present invention, the optical transfer functions of an imaging camera having an imaging optical system and an image sensor integrated with each other are calculated. Accordingly, the optical transfer functions reflecting the image degradation factor occurring in the imaging optical system actually disposed in the imaging camera and the image degradation factor ascribable to inter-element crosstalk of the image sensor can be calculated and at the same time the optical transfer functions can easily be calculated without dismantling the imaging camera.

According to the present invention, an image created with a digital imaging device is associated with the degradation factor information for correcting the image degraded due to the imaging means of the digital imaging device, and then outputted, and a correction is performed in an image correction server apparatus of the output destination. Accordingly, the present invention has an advantageous effect in that a corrected image can be obtained by performing a deconvolution processing without increasing the processing load of the digital imaging device.

Brief Description of the Drawings

Figure 1 is a configuration diagram of a spread function measurement apparatus according to a first embodiment of the present invention;

Figure 2 is an explanatory view of scanning of an image sensor according to the first embodiment of the present invention;

Figure 3 is a block diagram of an image restoration system according to the first embodiment of the present invention;

Figure 4 is a graph showing point spread function data generated in a spread function data generation unit according to the first embodiment of the present invention;

Figure 5 is a graph showing an optical transfer function calculated in an optical transfer function calculation unit according to the first embodiment of the present invention;

Figure 6 is a configuration diagram of a spread function measurement apparatus according to a second embodiment of the present invention;

Figure 7 is a configuration diagram of a spread function measurement apparatus according to a third embodiment of the present invention;

Figure 8 is an explanatory view of scanning of an image sensor according to the third embodiment of the present invention;

Figure 9 is a block diagram of an image restoration system according to a fourth embodiment of the present invention;

Figure 10 is a configuration diagram of an image restoration system according to a fifth embodiment of the present invention;

Figure 11 is a configuration diagram of an image restoration system according to a sixth embodiment of the present invention;

Figure 12 is a block diagram of an image correction system according to a seventh embodiment of the present invention;

Figure 13 is a view showing a point spread function of a portable telephone apparatus according to the seventh embodiment of the present invention;

Figure 14 is a view showing an optical transfer function of the portable telephone apparatus according to the seventh embodiment of the present invention;

Figure 15 is a flowchart for explaining the operation of an image correction system according to the seventh embodiment of the present invention;

Figure 16 is a block diagram of an image correction system according to an eighth embodiment of the present invention;

Figure 17 is a flowchart for explaining the operation of an image correction system according to the eighth embodiment of the present invention;

Figure 18 is a block diagram of an image correction system according to a ninth embodiment of the present invention; and

Figure 19 is a flowchart for explaining the operation of an image correction system according to the ninth embodiment of the present invention.

Best Mode for Carrying Out the Invention

Embodiments of the present invention will be described below with reference to the drawings.

(First Embodiment)

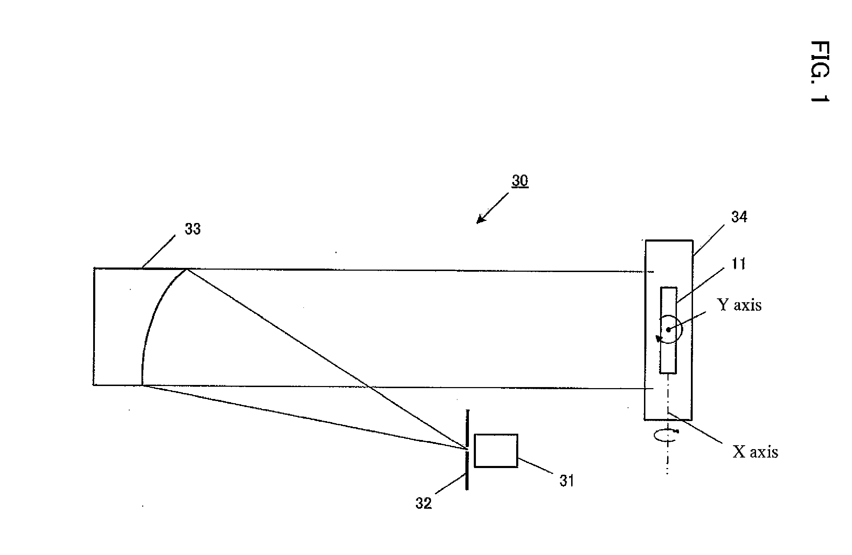

Figure 1 is a view showing a spread function measurement apparatus according to a first embodiment of the present invention. Referring to Figure 1, the spread function measurement apparatus 30 includes a light source 31, a pinhole board 32, an off-axis paraboloid mirror 33 and a camera holding mechanism 34. The spread function measurement apparatus 30 is an apparatus for measuring spread functions of an imaging camera provided with an imaging optical system and an image sensor such as a CCD or CMOS sensor. The light source 31 emits light having wavelength characteristics containing specification characteristics of an imaging camera to be measured. The pinhole board 32 is arranged in the vicinity of the light source 31. After passing through a pinhole of the pinhole board 32, the irradiating-light as divergent ray is incident on the off-axis paraboloid mirror 33. Reflected on the off-axis paraboloid mirror 33, the irradiating-light becomes collimated light with no color aberration. The collimated light is incident on an imaging optical system of an imaging camera 11 held in the camera holding mechanism 34.

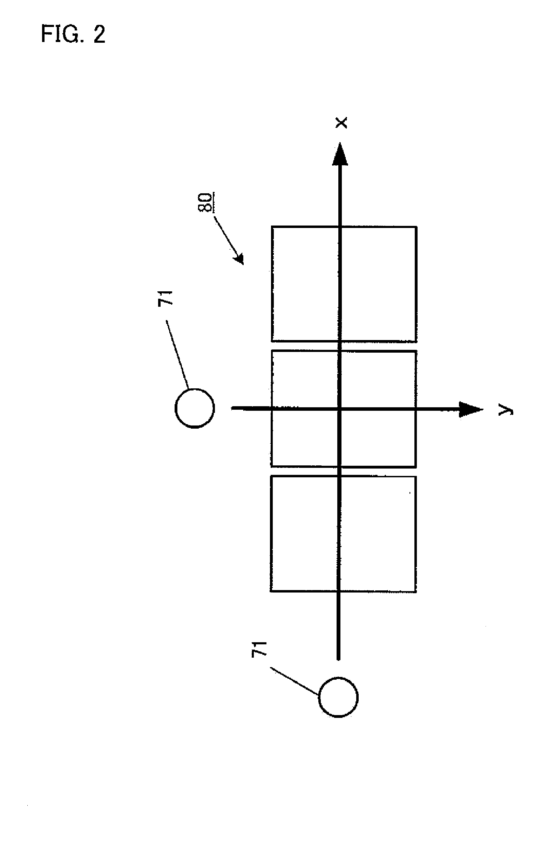

Figure 2 is a view for explaining an image (pinhole image) of irradiating-light projected on an imaging area of the imaging camera 11. The pinhole board 32 is disposed in a position where a conjugation condition is satisfied such that a pinhole image 71 have a paraxial ray size on the imaging area of the imaging camera 11 held in the camera holding mechanism 34. As shown in Figure 2, the diameter of the pinhole is set to a size such that the diameter of the pinhole image 71 is equal to or smaller than half the element pitch of an image sensor 80 on the imaging area of the imaging camera 11. The reason for setting the diameter of the pinhole image 71 to equal to or smaller than half the element pitch is to make the spread function formed from the irradiating-light source through the camera, equivalent to image formation by a point light source in the optical transfer function measurement.

The camera holding mechanism 34 is a mechanism for holding the imaging camera 11 to be measured. The camera holding mechanism 34 includes a rotation mechanism allowing the imaging camera 11 held to rotate around X axis and Y axis of the image sensor. As shown in Figure 2, by rotating around X axis, the pinhole image relatively moves in a direction of Y axis on the imaging area. By rotating around Y axis, the pinhole image relatively moves in a direction of X axis on the imaging area. When the imaging camera 11 is stepwise rotated by using the rotation mechanism, the image sensor of the imaging camera 11 is scanned in the X axis or Y axis direction by the irradiating-light. The step of rotation is set to a width such that the pinhole image is substantially smaller than the element pitch of the image sensor, for example, to a width of approximately one-tenth the element pitch. The image sensor of the imaging camera 11 performs for each step of rotation, a photoelectric conversion to generate an electrical signal.

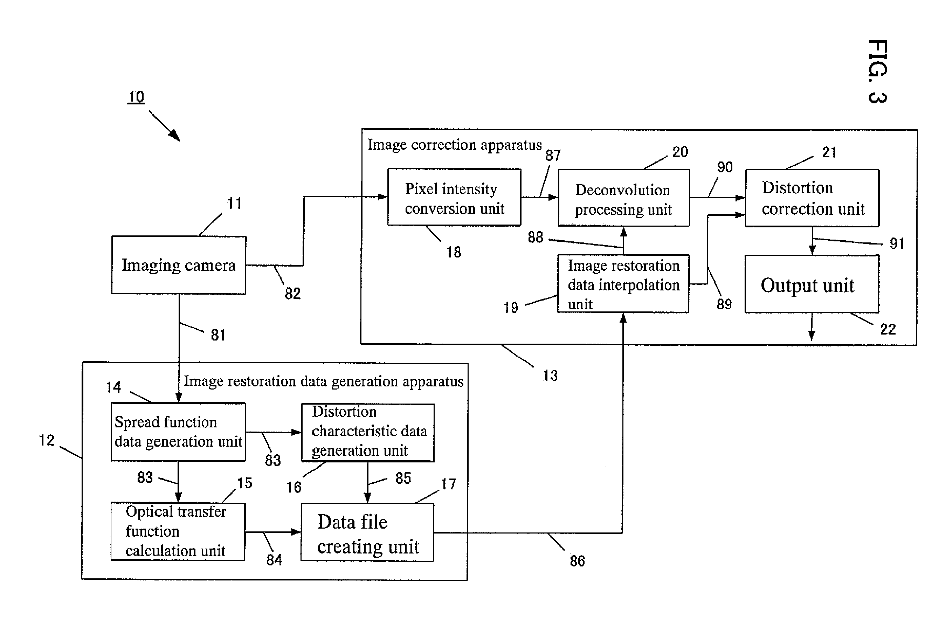

Figure 3 is a block diagram showing a configuration of an image restoration system 10 according to the first embodiment. As shown in Figure 3, the image restoration system 10 includes an imaging camera 11, an image restoration data generation apparatus 12 and an image correction apparatus 13. The imaging camera 11 includes an imaging optical system, an image sensor and an A/D converter. When placed in the camera holding mechanism 34 of the spread function measurement apparatus 30, the imaging camera 11 outputs to the image restoration data generation apparatus 12 an electrical signal 81 obtained in the photoelectric conversion performed by the image sensor. In an ordinary image capturing operation, the imaging camera 11 outputs as image data 82 to the image correction apparatus 13 an electrical signal obtained in the image sensor. Data transmission/reception is performed via wired or wireless communications between the imaging camera 11, the image restoration data generation apparatus 12 and the image correction apparatus 13. Instead of the communication, data transfer may be performed by use of a portable recording medium between the apparatuses.

The image restoration data generation apparatus 12 includes a spread function data generation unit 14, an optical transfer function calculation unit 15, a distortion characteristic data generation unit 16 and a data file creating unit 17. The spread function data generation unit 14 has a function of using an electrical signal 81 outputted from the imaging camera 11 placed in the spread function measurement apparatus 30 to generate spread function data 83 for each element to be measured, and outputting the generated spread function data 83. The spread function data generation unit 14 according to the present embodiment generates as spread function data, point spread function data. The optical transfer function calculation unit 15 has a function of applying a Fourier transform to the spread function data 83 of each element to be measured, outputted from the spread function data generation unit 14, and calculating an optical transfer function 84 consisting of Fourier spectrum and phase characteristic for each element to be measured.

The distortion characteristic data generation unit 16 has a function of using the spread function data 83 of a plurality of elements to be measured, outputted from the spread function data generation unit 14, to generate distortion characteristic data 85 indicating image distortion. The data file creating unit 17 has a function of creating image restoration data file 86 and outputting it. The image restoration data file 86 contains the optical transfer functions of all elements to be measured and the distortion characteristic data generated in the distortion characteristic data generation unit 16.

The image correction apparatus 13 includes a pixel intensity conversion unit 18, an image restoration data interpolation unit 19, a deconvolution processing unit 20, a distortion correction unit 21 and a restored image outputting unit 22. The pixel intensity conversion unit 18 has a function of applying an intensity conversion to image data outputted from the imaging camera 11 to generate image intensity data 87. The image restoration data interpolation unit 19 has a function of performing an interpolation processing by use of the optical transfer function of an element to be measured and thereby calculating an optical transfer function of an element other than the element to be measured. The optical transfer function used by the image restoration data interpolation unit 19 is contained in the image restoration data file outputted from the image restoration data generation apparatus 12. By this interpolation processing, the image restoration data interpolation unit 19 creates optical transfer functions 88 of all elements. The image restoration data interpolation unit 19 has a function of converting distortion characteristic data contained in the image restoration data to generate distortion correction data 89.

The deconvolution processing unit 20 has a function of performing a deconvolution processing of the image intensity data 87 generated by the pixel intensity conversion unit 18 with the optical transfer functions generated in the image restoration data interpolation unit 19 and thereby generating restored image data 90. The distortion correction unit 21 has a function of applying a distortion correction to the restored image data 90 generated in the deconvolution processing by use of the distortion correction data 89 generated in the image restoration data interpolation unit 19 and thereby generating distortion correction image data 91. The outputting unit 22 has a function of outputting the distortion correction image data 91.

The operation of the spread function measurement apparatus 30 and image restoration system 10 having the above described configuration will be described. The operation of generating image restoration data file 86 containing optical transfer functions and distortion characteristic data, and the operation of correcting image data 82 by use of image restoration data file 86 will be separately described below.

First, the operation of generating image restoration data file 86 will be described. To create image restoration data file, firstly, the imaging camera 11 is placed in the camera holding mechanism 34 of the spread function measurement apparatus 30. In this case, the imaging camera 11 is disposed in a direction such that the imaging optical system of the imaging camera 11 takes in the reflected light from the off-axis paraboloid mirror 33. The light source 31 emits irradiating-light. The irradiating-light passes through the pinhole of the pinhole board 32 and is collimated by the off-axis paraboloid mirror 33 and reflected toward the imaging camera 11 held in the camera holding mechanism 34. The reflected light passes through the imaging optical system of the imaging camera 11 and is irradiated on the imaging area. In this state, the irradiating-light scans the image sensor.

While a pinhole image is projected on the image sensor of the imaging area, the camera holding mechanism 34 rotates stepwise around Y axis (refer to Figure 1). Accordingly, the irradiating-light image scans in a direction of X axis one element (an element to be measured) constituting the image sensor. Also, when the camera holding mechanism 34 rotates around X axis, the irradiating-light scans the element in a direction of Y axis. The image sensor of the imaging camera 11 perform a photoelectric conversion of irradiating-light every rotation step. The image sensor outputs to the spread function data generation unit 14 of the image restoration data generation apparatus 12 an electrical signal 81 obtained by performing the photoelectric conversion. When receiving the electrical signal 81 for each step from the imaging camera 11, the spread function data generation unit 14 generates spread function data 83 by use of the electrical signal 81.

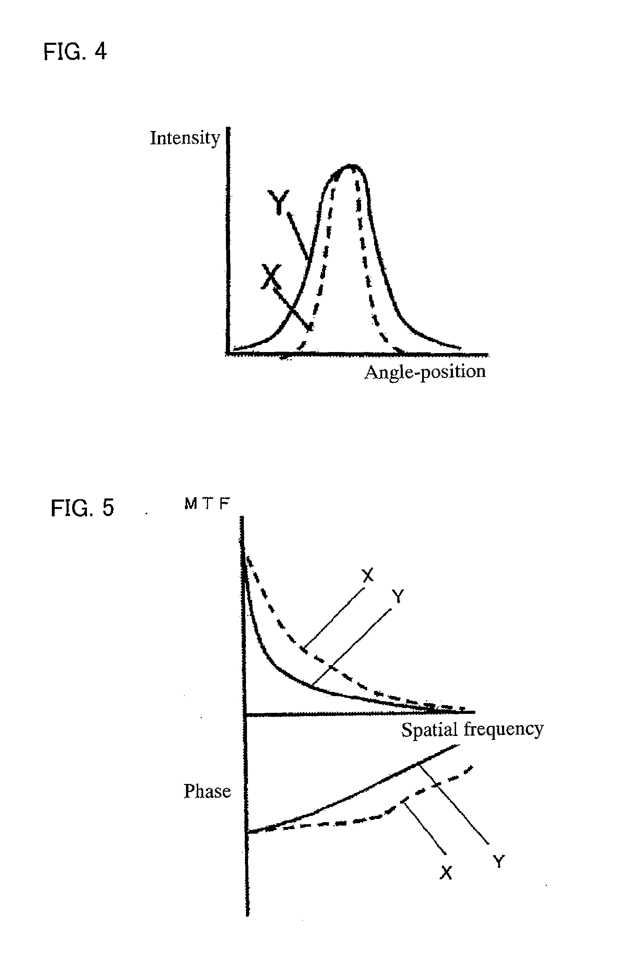

Figure 4 is a graph showing spread function data 83 generated by the spread function data generation unit 14. In the graph of Figure 4, scanning angle is plotted along the abscissa and the intensity of electrical signal outputted from the element to be measured along the ordinate. When the scanning angle of spread function data is converted into a focal length of imaging optical system, spatial spread function data is obtained.

As shown in Figure 4, the spread function data 83 has a distribution profile which is not point-symmetrical due to aberration. In the present embodiment, as shown in Figure 4, when the scanning by irradiating-light is performed in a direction of Y axis, the distribution is wider than when the scanning by irradiating-light is performed in a direction of X axis. This indicates that the irradiating-light image forms on the imaging area an ellipse; major axis, a direction of Y axis, and minor axis, a direction of X axis.

The spread function measurement apparatus 30 and the image restoration system 10 measure spread functions by performing scanning in a direction of X axis with respect to a plurality of elements, and also measure an spread function by performing scanning in a direction of Y axis with respect to a plurality of elements. Here, the measurements by scanning in a direction of X axis and by scanning in a direction of Y axis are each performed for five elements. The elements to be measured are evenly selected from the image sensor. The spread function data generation unit 14 generates spread function data for each element to be measured and outputs it to the optical transfer function calculation unit 15 and the distortion characteristic data generation unit 16. The optical transfer function calculation unit 15 applies a Fourier transform at spatial frequency to the spread function data 83 of each element to be measured outputted from the spread function data generation unit 14 and thereby calculates optical transfer functions 84 of each element to be measured.

Figure 5 is a graph showing an optical transfer function 84 obtained by applying a Fourier transform to the spread function data 83 outputted from the spread function data generation unit 14 in the optical transfer function calculation unit 15. As shown in Figure 5, the optical transfer function 84 consists of Fourier spectrum and phase characteristic. According to the present embodiment, in the spread function data generation unit 14, 10 spread function data 83 corresponding to 10 elements to be measured are generated. Thus the optical transfer function calculation unit 15 applies a Fourier transform to these spread function data 83 and thereby calculates 10 optical transfer functions 84.

The distortion characteristic data generation unit 16 takes in the spread function data 83 outputted from the spread function data generation unit 14. Based on the spread function data 83, the distortion characteristic data generation unit 16 calculates a scanning angle (maximum intensity angle) at which the pixel intensity has a maximum value, for each element to be measured. Then, from the maximum intensity angle of each element to be measured and the information on position of these elements to be measured, the distortion characteristic data generation unit 16 calculates scanning angles at which the pixel intensity has a maximum value, for elements which are not measured. The maximum intensity angle data of each element generated in this manner is equivalent to distortion characteristics of intensity median point of each element. The distortion characteristic data generation unit 16 outputs this data as distortion characteristic data 85.

The data file creating unit 17 creates image restoration data file 86 containing the optical transfer function 84 of each element outputted from the optical transfer function calculation unit 15 and the distortion characteristic data 85 outputted from the distortion characteristic data generation unit 16, and outputs the image restoration data file 86.

The operation of using image restoration data file 86 to correct image data 82 will now be described. First, the image restoration data interpolation unit 19 takes in image restoration data file 86 outputted from the image restoration data generation apparatus 12. As described above, according to the present embodiment, the image restoration data file 86 contains only 10 optical transfer functions 84 corresponding to 10 elements to be measured. The image restoration data interpolation unit 19 uses these 10 optical transfer functions 84 to perform an interpolation processing, and calculates the optical transfer functions of elements other than those elements to be measured. For the interpolation processing, known techniques, such as spline interpolation, can be employed. The optical transfer functions 88 of all elements on the imaging area can be calculated by this interpolation processing.

The image restoration data interpolation unit 19 converts the distortion characteristic data 85 contained in the image restoration data file 86 and thereby generates distortion correction data 89. The image restoration data interpolation unit 19 stores the generated optical transfer functions 88 and distortion correction data 89 of all elements.

The operation of using image restoration data file to correct image data will now be described. Light from the object passes through the imaging optical system of the imaging camera 11 and is projected on the imaging area. Then the image sensor applies a photoelectric conversion to the light from the object and generates and outputs image data 82. The image data 82, degraded due to factors such as imaging optical system aberration and inter-element crosstalk, is to be corrected by the image correction apparatus 13.

The image correction apparatus 13 takes in the image data 82 outputted from the imaging camera 11. In the image correction apparatus 13, the pixel intensity conversion unit 18 applies an intensity conversion to the imaging data 82 and thereby generates image intensity data 87. Subsequently, the deconvolution processing unit 20 applies a deconvolution processing to the image intensity data 87 generated in the pixel intensity conversion unit 18. The deconvolution processing unit 20 uses the optical transfer functions 88 stored in the image restoration data interpolation unit 19 and thereby performs a deconvolution processing.

The deconvolution processing unit 20 uses as deconvolution processing restoration filter M (u, v) the following function.

[Formula 1]

$$M(u,v) = \frac{H^*(u,v)S_{ff}(u,v)}{S_{ff}(u,v)\left|H(u,v)\right|^2 + S_{vv}(u,v)}$$

$$= \frac{1}{H(u,v)} \frac{\left|H(u,v)\right|^2}{\left|H(u,v)\right|^2 + \left[S_{vv}(u,v)/S_{ff}(u,v)\right]}$$

In the above formula, H (u, v) is an optical transfer function; Sff is the spectrum density of an input signal, i. e. , image intensity data 87 outputted from the pixel intensity conversion unit 18; Svv(u, v) is noise spectrum density.

When two-dimensional Fourier transforms of the original image f (x, y), degraded image g (x, y) and restored image f∧(x, y) are F (u, v), G (u, v) and F∧(u, v), respectively,

$$F\hat{}(u, v) = (H(u, v) * M(u, v)) * F(u, v),$$

and

$$F\hat{}(u, v) = M(u, v) * G(u, v)$$

where "*" denotes convolution integration. The deconvolution processing unit 20 performs a convolution integration of two-dimensional Fourier transform G (u, v) of a degraded image with restoration filter M (u, v) to calculate F∧(u, v), and then applies an inverse Fourier transform to F∧(u, v) to calculate restored image f∧(x, y). The deconvolution processing unit 20 creates restoration filter M (u, v) according to noise characteristics of image data for each image data to which a deconvolution processing is to be applied.

The deconvolution processing unit 20 outputs the generated restored image data 90 to the distortion correction unit 21. In the restored image data 90, there is the remnant of degradation ascribable to image distortion. The distortion correction unit 21 reads the distortion correction data 89 from the image restoration data interpolation unit 19. To generate distortion correction image data 91, the distortion correction unit 21 applies to the restored image data 90 a distortion correction using the distortion correction data 89; the distortion correction consists of coordinate conversion and interpolation processing. The distortion correction unit 21 outputs the distortion correction image data 91 via the output unit 22. The output destination of the distortion correction image data 91 may be a memory within the image correction apparatus 13, a portable storage medium or a monitor. Alternatively, the output unit 22 may output the distortion correction image data 91 to a communication line.

According to the measuring method for optical transfer function of the present embodiment, while the imaging optical system and the image sensor are assembled into the imaging camera 11, the spread function measurement is performed. Accordingly, spread function data containing the effects of the focus state of the imaging camera 11, element crosstalk, and the like is obtained. In the image correction apparatus 13, the optical transfer function obtained from the spread function data is used to perform a deconvolution processing. Accordingly, not only image degradation ascribable to the limits of resolution performance of imaging optical system but also image degradation ascribable to the effects of the focus state and element crosstalk are reduced, thus making it possible to obtain high-resolution restored image data.

According to the present embodiment, spread function data is calculated for each element to calculate an optical transfer function. Accordingly, even when the degree of image degradation varies according to incident position, such degree of image degradation can be appropriately corrected to obtain high-resolution restored image data. Since a spread function is calculated for each element, when the peak of spread function is identified, the scanning angle corresponding to when irradiating-light from the light source is incident on the center of the sensor can be calculated. Accordingly, distortion correction data for correcting image distortion ascribable to the imaging optical system can be generated. When the distortion correction data is used to correct image data, restored image data with reduced image distortion ascribable to the imaging optical system is obtained.

(Second Embodiment)

A second embodiment of the present invention will now be described.
According to the first embodiment described above, the rotation of the imaging camera 11 allows irradiating-light to move relatively on the imaging area of image sensor, whereby elements to be measured are scanned. According to the present embodiment, the imaging camera 11 remains fixed, and the position of irradiating-light is changed, whereby elements to be measured are scanned.

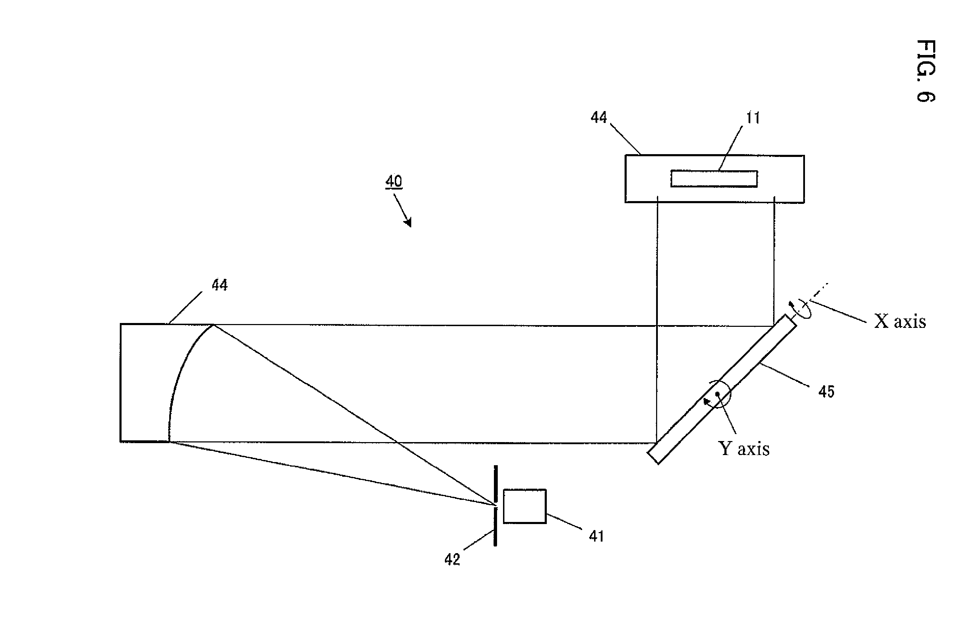

Figure 6 is a configuration diagram of a spread function measurement apparatus according to the present embodiment. As shown in Figure 6, in the spread function measurement apparatus 40, light irradiated from a light source 41 passes through a pinhole of a pinhole board 42 and is reflected on an off-axis paraboloid mirror 43 and becomes collimated light. Then the collimated irradiating-light is reflected on a reflecting mirror 45 and incident on the imaging optical system of an imaging camera 11 held in a camera holding mechanism 44.

The reflecting mirror 45 is rotatable around X axis or Y axis disposed within the mirror face. The reflecting mirror 45 is rotated stepwise around X axis or Y axis by a rotation drive mechanism (not shown). When the reflecting mirror 45 rotates around Y axis, the image of irradiating-light moves in a direction of X axis on the imaging area. When the reflecting mirror 45 rotates around X axis, the image of irradiating-light moves in a direction of Y axis on the imaging area. In this manner, by allowing the reflecting mirror 45 to rotate, irradiating-light scans elements to be measured in a direction of X axis and in a direction of Y axis.

The processing of scanning elements to be measured and generating spread function data 83 for each element to be measured, and the subsequent processing of generating an optical transfer function 84 and distortion characteristic data 85 are the same as those of the first embodiment. The processing of restoring image data 82 by use of the image correction apparatus 13 is also similar to that of the first embodiment. According to the present embodiment, also, an advantageous effect similar to that of the first embodiment is obtained.

(Third Embodiment)

A third embodiment of the present invention will now be described.
In the spread function measurement apparatus 30 according to the first embodiment described above, the pinhole board 32 is arranged in the vicinity of the light source 31, whereby a point-like irradiating-light image is projected on the imaging area. According to the present embodiment, instead of the pinhole board 32, a slit board is provided, whereby the image sensor is scanned with linear irradiating-light.

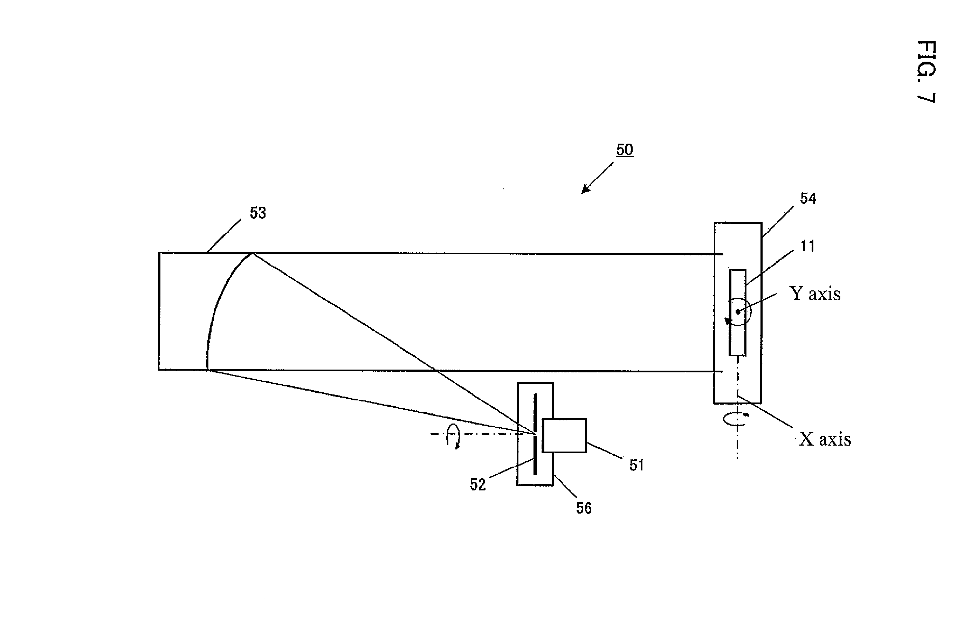

Figure 7 is a configuration diagram of a spread function measurement apparatus according to the present embodiment. As shown in Figure 7, in the spread function measurement apparatus 50, a slit board 52 is arranged in the vicinity of a light source 51. The slit board 52 is held in a slit holding mechanism 56. The slit holding mechanism 56 has a mechanism that rotates the slit board 52 so that the longitudinal direction of the slit is adjusted to a longitudinal direction or a lateral direction. Irradiating-light emitted from the light source 51 passes through the slit of the slit board 52 and is reflected on an off-axis paraboloidmirror 53 and becomes collimated light.

This collimated light is projected on the imaging area of an image sensor via the imaging optical system of an imaging camera 11 held in a camera holding mechanism 54. The slit width of the slit board 52 is set to a size such that the paraxial image width of an image projected on the image sensor of the imaging camera 11 is equal to or smaller than half the element pitch of the image sensor. The reason for setting the paraxial image width to a size equal to or smaller than half the element pitch is to make the line spread function formed from the irradiating-light source through the camera, equivalent to image formation by a line light source in the optical transfer function measurement.

The basic configuration of an image restoration system 10 according to the present embodiment is similar to that of the first embodiment. In the present embodiment, slit light scans elements to be measured. Therefore, in the spread function data generation unit 14, spread function data of a plurality of elements to be measured can be simultaneously obtained.

The operation of the spread function measurement apparatus 50 and image restoration system 10 according to the third embodiment having the above described configuration will be described. First, the slit holding mechanism 56 holds the slit board 52 so that the longitudinal direction of the slit is adjusted to a longitudinal direction. As described above, irradiating-light from the light source 51 passes through the slit of the slit board 52 and is reflected on the off-axis paraboloid mirror 53 and becomes slit-like collimated light and is incident on the imaging camera 11 held in the camera holding mechanism 54. Then the slit light is projected on the imaging area via the imaging optical system of the imaging camera 11.

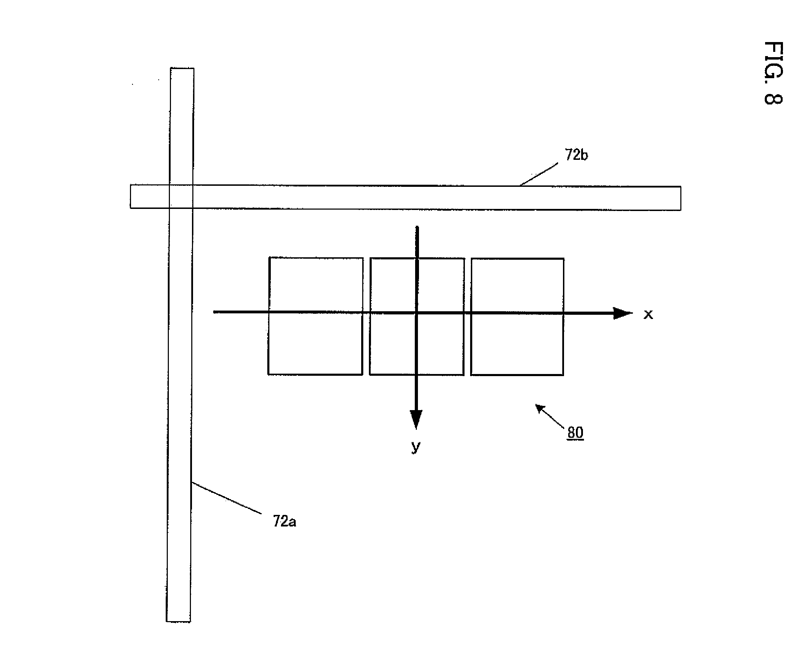

Figure 8 is a view for explaining an image (slit image) of slit light projected on the imaging area. A slit image 72a is obtained when the slit is held in a longitudinal direction. In this state, the camera holding mechanism 54 rotates stepwise the imaging camera 11 around Y axis. Accordingly, the slit image 72a scans in a direction of X axis a plurality of elements to be measured arranged in a direction of Y axis. When scanning the image sensor in a direction of Y axis, the slit holding mechanism 56 rotates the slit board 52 by 90 degrees so that the longitudinal direction of the slit 52 is adjusted to a lateral direction. Accordingly, a slit image 72b parallel to X axis is projected on the imaging area. In this state, when the camera holding mechanism 54 rotates stepwise the imaging camera 11 around X axis, the slit image 72b is moved in a direction of Y axis.

The image sensor of the imaging camera 11 applies an photoelectric conversion to the projected light for each step to obtain an electrical signal 81, and outputs the electrical signal 81 to an spread function data generation unit 14 of an image restoration data generation unit 12. When receiving the electrical signal 81 of each step from the imaging camera 11, the spread function data generation unit 14 uses the electrical signal 81 to generate spread function data 83. According to the present embodiment, the spread function data generation unit 14 generates as the spread function data 83, line spread function data.

The processing of generating an optical transfer function 84 and distortion characteristic data 85 after obtaining the spread function data 83 of a plurality of elements to be measured of the image sensor is similar to that of the first embodiment. The processing of restoring the image data 82 generated with the imaging camera 11 is also similar to that of the first embodiment.

In the above example, the direction of slit light is changed by changing the direction of the slit board 52, whereby the slit light scans elements to be measured in a direction of X axis and in a direction of Y axis. Instead of changing the direction of the slit board 52, the direction of the imaging camera 11 may be rotated by 90 degrees by the camera holding mechanism 54 to change the direction of a slit image projected on the imaging area.

According to the present embodiment, also, an advantageous effect similar to that of the first embodiment is obtained. In the present embodiment, slit light scans the image sensor to measure simultaneously spread function of a plurality of elements. Thus, increasing of the number of measurement points or shortening of measurement time is possible. Particularly, as the slit length of the slit board 52 becomes greater within the aplanatic range of the off-axis paraboloid mirror 53, the advantageous effect is larger.

(Fourth Embodiment)

A fourth embodiment of the present invention will now be described. The configuration of a spread function measurement apparatus according to the fourth embodiment is similar to that of the first embodiment. In the present embodiment, the configuration of an image restoration system 10 is different from that of the above described embodiment.

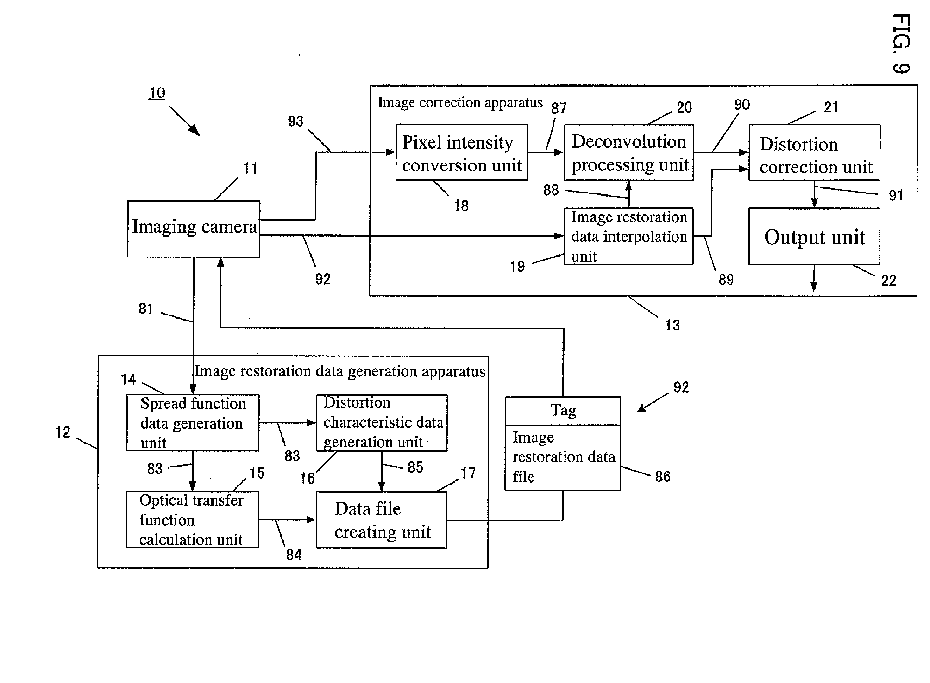

Figure 9 is a block diagram showing a configuration of an image restoration system according to the fourth embodiment. In Figure 9, the same reference numerals are applied to constituent parts similar to the image restoration system 10 of the first embodiment, and an explanation thereof is omitted. As described in Figure 9, the image restoration system 10 includes an imaging camera 11, an image restoration data generation apparatus 12 and an image correction apparatus 13. The image restoration data generation apparatus 12 includes a spread function data generation unit 14, an optical transfer function calculation unit 15, a distortion characteristic data generation unit 16 and a data file creating unit 17. Similarly to the first embodiment, the image restoration data generation apparatus 12 generates image restoration data file 86 containing optical transfer functions 84 and distortion characteristic data 85 of a plurality of elements to be measured. Further, the data file creating unit 17 according to the present embodiment attaches to the image restoration data file 86 a tag indicating a file number for specifying the image restoration data file 86 to generate and output image restoration data file 92 with tag.

After receiving the image restoration data file 92 with tag, the imaging camera 11 performs a processing for registering a file number with the image correction apparatus 13. In this processing, the imaging camera 11 transmits the image restoration data file 92 with tag to the image correction apparatus 13. In the image correction apparatus 13, when receiving the image restoration data file 92 with tag, the image restoration data interpolation unit 19 performs an interpolation processing and a conversion processing similarly to the first embodiment to generate optical transfer functions 88 and distortion correction data 89 of all elements. The image restoration data interpolation unit 19 associates the generated optical transfer functions 88 and distortion correction data 89 of all elements with the file numbers indicated by each tag, and stores them.

The operation of using an image restoration data file to correct image data will now be described. The imaging camera 11 captures an image of an object. The imaging camera 11 attaches to the image data obtained by performing the image-capturing a tag indicating a file number for specifying the image restoration data file to generate and output the image data 93 with tag. The image correction apparatus 13 takes in the image data 93 with tag, and uses the optical transfer function 88 and distortion correction data 89 corresponding to the file number indicated by the tag to apply a deconvolution processing and a distortion correction to the image data.

According to the present embodiment, even when optical transfer functions and distortion correction data of various imaging cameras 11 are stored in the image correction apparatus 13, it is possible to prevent the optical transfer function and distortion correction data to be used by the deconvolution processing unit 20 and the distortion correction unit 21 with respect to the obtained image data from being mistakenly used.

(Fifth Embodiment)

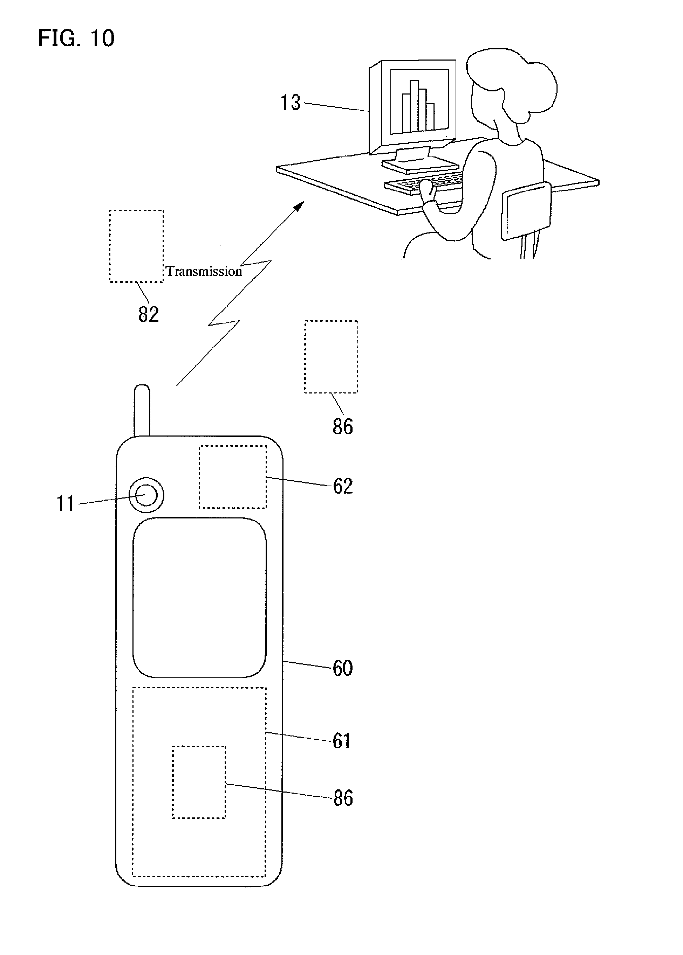

A fifth embodiment of the present invention will now be described. Figure 10 is a view showing an image restoration system 10 according to the present embodiment. The image restoration system 10 comprises a mobile telephone apparatus 60 and an image correction apparatus 13. The mobile telephone apparatus 60 includes an imaging camera 11. The mobile telephone apparatus 60 is placed, similarly to the imaging camera 11 of the first embodiment, in a camera holding mechanism 34 of a spread function measurement apparatus 30, and the imaging camera 11 creates image restoration data file 86 consisting of optical transfer functions and distortion characteristic data of elements to be measured. The mobile telephone apparatus 60 saves the image restoration data file 86 into an internal memory 61.

The mobile telephone apparatus 60 includes a data transmission unit 62. After image data 82 is generated by causing the imaging camera 11 of the mobile telephone apparatus 60 to capture an image of an object, the mobile telephone apparatus 60 transmits as a set of data the image data 82 and the image restoration data file 86 saved in the internal memory 61 to the image correction apparatus 13. The image correction apparatus 13 has a configuration similar to that of the first embodiment. When the image correction apparatus 13 receives the image data 82 and the image restoration data file 86, the operator of the image correction apparatus 13 uses the received image restoration data file 86 to apply a deconvolution processing and a distortion correction to the image data 82.

According to the above described configuration, image data and image restoration data file for restoring the image data are received as a set of data, so the original image can easily be restored in the image correction apparatus.

(Sixth Embodiment)

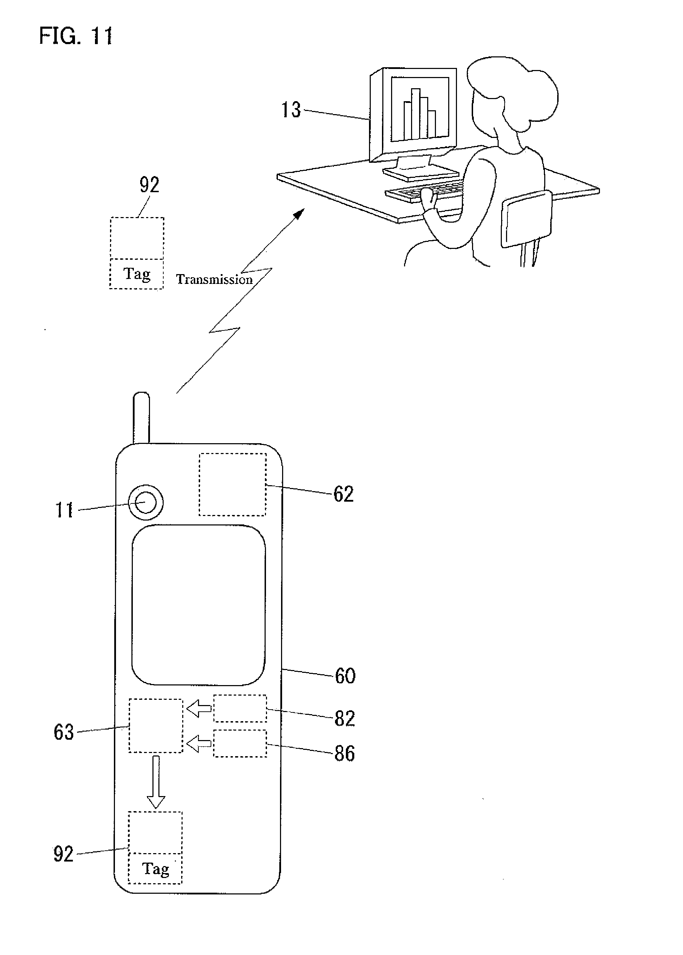

A sixth embodiment of the present invention will now be described. Figure 11 is a view showing an image restoration system 10 according to the sixth embodiment. The image restoration system 10 comprises a mobile telephone apparatus 60 and an image correction apparatus 13. The mobile telephone apparatus 60 includes an imaging camera 11. The mobile telephone apparatus 60 is placed, similarly to the imaging camera 11 of the first embodiment, in a camera holding mechanism 34 of an spread function measurement apparatus 30, and creates image restoration data file 86 consisting of optical transfer functions 84 and distortion characteristic data 85. The mobile telephone apparatus 60 saves the image restoration data file 86 into an internal memory 61.

The mobile telephone apparatus 60 includes a tag generation unit 63. When the imaging camera 11 captures an image of an object and generates image data 82, the tag generation unit 63 attaches to the image data a tag indicating a file number for specifying the image restoration data file 86 saved in the internal memory 61, and thereby generates image data 92 with tag.

The mobile telephone apparatus 60 includes a data transmission unit 62. The data transmission unit 62 transmits to the image correction apparatus 13 the image data 92 with tag generated in the tag generation unit 63. The image correction apparatus 13 has a configuration similar to the image correction apparatus 13 of the fourth embodiment. When the image correction apparatus 13 receives the image data with tag, the operator uses the image restoration data file 86 corresponding to the file number indicated by the tag to apply a deconvolution processing and a distortion correction to the obtained image data.

According to the above described configuration, a tag indicating a file number is attached to image data by the tag generation unit 63 to generate image data with tag, and the image data with tag is transmitted. Consequently, the image correction apparatus 13 can perform the processing without mistakenly selecting image restoration data from among the mixed files. It is not needed to transmit image restoration data file from the mobile telephone apparatus 60 each time the image correction apparatus 13 corrects image data received from the mobile telephone apparatus 60, thus reducing communication load.

It is noted that, in the above description, the image restoration data generation apparatus 12 calculates the optical transfer functions 84 of only elements to be measured, and the image restoration data interpolation unit 19 of the image correction apparatus 13 performs an interpolation processing and thereby calculates the optical transfer functions of elements other than those elements to be measured, but the present invention is not limited thereto. The image restoration data generation apparatus 12 may perform an interpolation processing and thereby generates the optical transfer functions of all elements. In the above description, the image restoration data generation apparatus 12 generates distortion characteristic data 85 indicating distortion characteristics of an imaging optical system, and the image restoration data interpolation unit 19 of the image correction apparatus 13 converts the distortion characteristic data 85 to generate distortion correction data 89. The present invention is not limited thereto; the image restoration data generation apparatus 12 may generate distortion correction data.

In the above description, some of the elements constituting the image sensor is selected as elements to be measured, and the spread function data 83 of the elements to be measured are generated to calculate the optical transfer functions. With respect to elements other than the elements to be measured, the optical transfer functions are calculated by an interpolation processing. The present invention is not limited thereto; all elements may be scanned with irradiating-light to generate the spread function data of all the elements, and the optical transfer functions of all the elements may be calculated without performing any interpolation processing.

In the above description, in the spread function measurement apparatus, irradiating-light passing through the pinhole or slit is reflected on the off-axis paraboloid mirror to be converted to collimated light. However, the irradiating-light may be transmitted through a transmissive optical system whose aberration is corrected to be converted to collimated light.

In the above description, by rotating the imaging camera or the reflecting mirror, elements to be measured are scanned. However, the elements to be measured may be scanned by allowing the imaging camera or reflecting mirror to move in parallel.

In the above description, an example in which a file number for specifying a data file is used as tag information is described. Another information may be used. For example, the file name of a data file, setting information or the like of the camera optical system, such as zooming condition and f-number/aperture, can be used as the tag information.

(Seventh Embodiment)

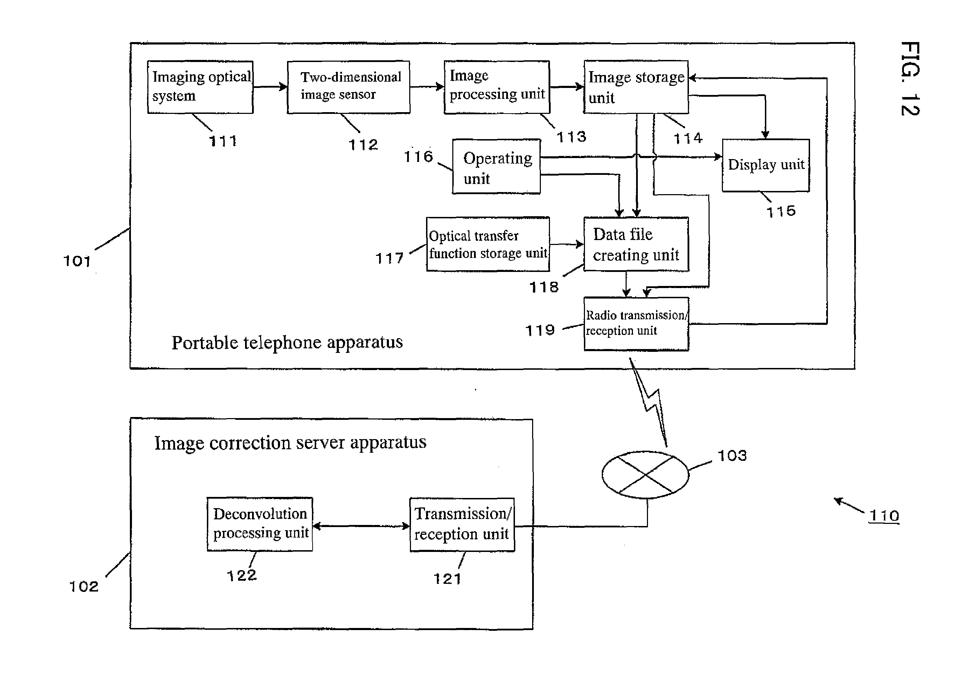

Figure 12 is a view showing an image correction system according to a seventh embodiment. Referring to Figure 12, the image correction system 110 includes a portable telephone apparatus 101 with camera and an image correction server apparatus 102 communicable with each other via a network 103.

The network 103 is the Internet, for example. Data transmission/reception via the network 103 may be transmission/reception by e-mail. Alternatively, data may be transmitted/received by CGI (Common Gateway Interface) or the like using Web server/client technology.

The portable telephone apparatus 101 includes an imaging optical system 111, a two-dimensional image sensor 112 and an image processing unit 113. The imaging optical system 111 is a fixed focal length lens system. The two-dimensional image sensor 112 is constituted of a solid-state image sensor such as CCD, and has a function of applying a photoelectric conversion to light coming from an object through the imaging optical system 111. The image processing unit 113 has a function of applying processings, such as AD conversion, DCT conversion, quantization and entropy coding, to an electrical signal generated by causing the two-dimensional image sensor 112 to perform a photoelectric conversion, and thereby generating an image compressed in JPEG format. The portable telephone apparatus 101 corresponds to the digital imaging device of the present invention. The imaging means of the present invention is constituted of the imaging optical system 111, the two-dimensional image sensor 112 and the image processing unit 113.

When the portable telephone apparatus 101 has a thickness-reduced and miniaturized configuration, the focal length of the imaging optical system 111 is shortened. Thus, f-number is enlarged and a blurred object image is projected on the two-dimensional image sensor 112. Consequently, the image obtained in the image processing unit 113 is one having picture quality degraded due to the imaging optical system 111. The image degradation will be described.

The optical transfer function and critical frequency defining the resolution of the imaging optical system 111 depends on f-number even when the imaging optical system 111 has no aberration at all. More specifically, when the f-number of the imaging optical system 111 is large, Point Spread Function (PSF) is wide, and optical transfer function and critical frequency are reduced, and the resolution of the imaging optical system 111 is deteriorated.

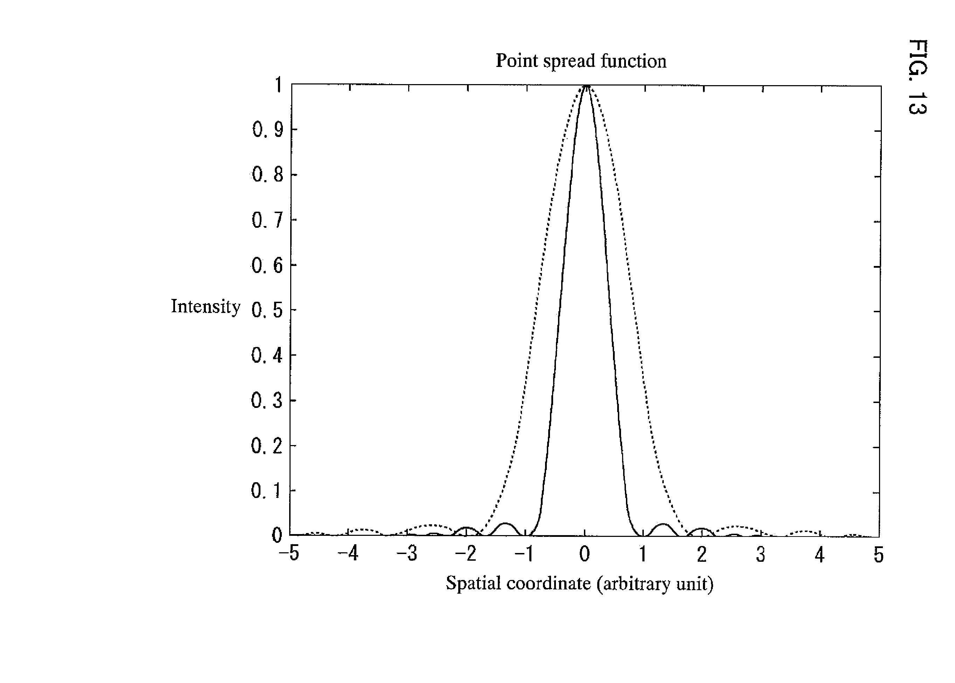

Figure 13 is a view showing a point spread function. Referring to Figure 13, the dotted line denotes the point spread function of an imaging optical, system having a large f-number. The solid line denotes the point spread function of an imaging optical system having a small f-number. From Figure 13, it can be seen that when f-number is large, point spread function is wide. When point spread function is wide, Rayleigh's resolution performance (ra = 1.22λ) of resolving any given two points increases.

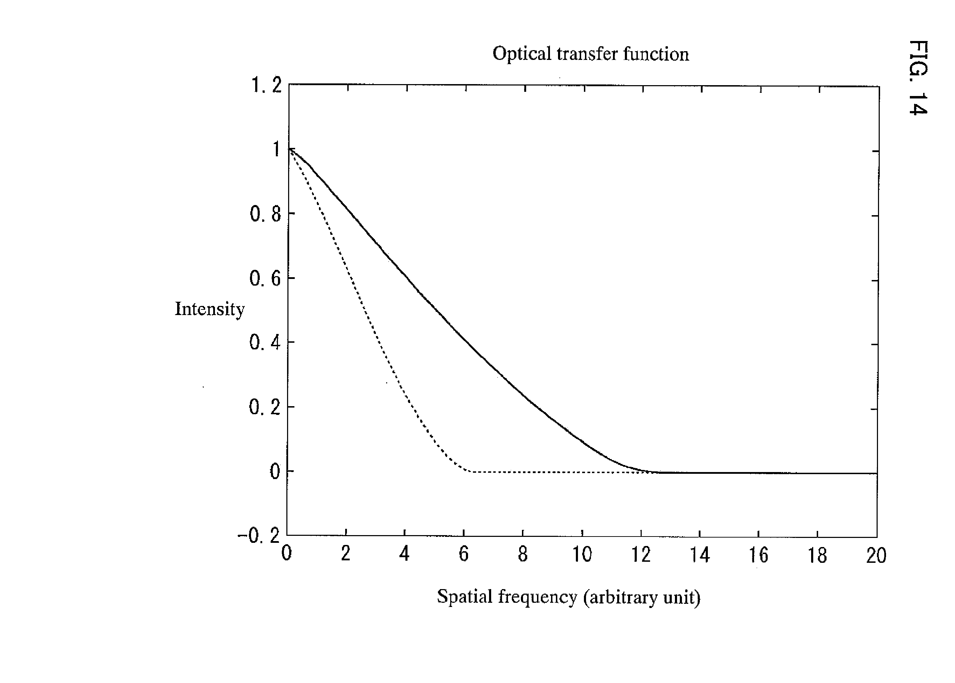

Figure 14 is a view for representing the increase of Rayleigh's resolution performance by optical transfer function being Fourier transform of point spread function. Referring to Figure 14, the dotted line denotes a case where f-number is small, and the solid line denotes a case where f-number is large. In an imaging optical system having a large f-number, MTF (Modulation Transfer Function) being the absolute value of optical transfer function is small at the same spatial frequency, and further the critical frequency is small as expressed by Uc = 1/(λF) when there is no aberration.

Therefore, the focal length and entrance pupil diameter are ordinarily selected so that the f-number is sufficiently reduced. However, in a portable telephone apparatus with camera, the thickness is reduced and the number of lenses is limited, so it may be impossible to reduce the f-number. In this case, as the f-number increases, the effects of aberration are more likely to appear, thus reducing the high-frequency component value of MTF. This is the reason why, even when the number of pixels of the two-dimensional image sensor 112 increases, the picture quality is not improved.

When this problem is described as a problem of point spread function obtained by applying a Fourier transform to optical transfer function, the description is as follows. That is, in an imaging optical system having a large f-number, the point spread function is wide relative to the pixel pitch. Accordingly, two points close to each other to the extent of Rayleigh's resolution performance cannot be sufficiently resolved, and the resolution performance signifying that the two points can be resolved is not improved to the extent of the increase of the number of pixels in the two-dimensional image sensor.

The increase of the number of pixels in a two-dimensional image sensor leads to the increase of spatial sampling frequency. When the number of pixels increases, spatial Nyquist frequency increases, and at the same aperture ratio, MTF has a high value in a range up to a higher spatial frequency. Accordingly, when the number of pixels of a two-dimensional image sensor is increased, MTF is notably reduced at a spatial frequency which does not cause any problem in an imaging optical system having a large f-number before the number of pixels is increased. As described above, the image obtained by use of imaging means constituted of an imaging optical system 111, a two-dimensional image sensor 112 and an image processing unit 113 is degraded as the portable telephone apparatus is reduced in thickness and the number of pixels is increased.

Returning to Figure 12, the portable telephone apparatus 101 includes an image storage unit 114 and a display unit 115. The image storage unit 114 stores images generated in the image processing unit 113. The display unit 115 has a function of displaying images stored in the image storage unit 114.

The portable telephone apparatus 101 further includes an operating unit 116, an optical transfer function storage unit 117, a data file creating unit 118 and a radio transmission/reception unit 119. The operating unit 116 includes buttons for accepting various inputs from the user. The optical transfer function storage unit 117 stores the optical transfer function of the portable telephone apparatus 101. Generally, the optical transfer function storage unit 117 stores different optical transfer functions for each individual portable telephone apparatus.

Optical transfer functions are used to correct a correction subject image by a deconvolution processing as described later. Generally, in order to measure optical transfer functions of a digital camera, a dedicated optical transfer function measurement apparatus must be installed on the imaging surface of the imaging optical system of the digital camera to perform the measurement. To perform such measurement, an operation of disassembling and reassembling the digital camera is needed. Ordinarily, the user of a digital camera does not have such measurement apparatus, and the disassembly and reassembly of a digital camera is not easy to perform. Further, it is difficult for an ordinary user to evaluate not only MTF of an imaging optical system alone but also MTF of the whole digital camera including MTF of the two-dimensional image sensor.

Thus, there has been an approach of calculating optical transfer functions, without requiring an additional measurement apparatus, from an image generated by image-capturing by the digital camera. The approach of calculating MTF of the whole digital camera from an image obtained with the digital camera evaluates simultaneously MTF of the two-dimensional image sensor as well as MTF of the imaging optical system alone, so the approach is a useful technique for evaluating MTF of the digital camera. As such MTF calculation technique, for example, there has been known a technique of using a resolution chart of ISO-12233 and calculating optical transfer functions by use of Fourier transform of derivation of knife-edge image. Also, there has been known a technique of using a sine-wave test chart and thereby calculating from the contrast obtained after image-capturing, the value of MTF at each spatial frequency.

However, in the technique using a sine-wave test chart, a test chart having sinusoidal contrast must be used. The test chart, being expensive, cannot be used readily by an ordinary user. Further, the calculation itself of the value of MTF from the test chart is not easy to perform. As described above, with any of the techniques, it is difficult for an ordinary user to obtain MTF required for deconvolution processing.

As a deconvolution processing not requiring MTF, there has been the blind deconvolution processing known as being used to restore blurred images of Hubble Telescope. However, this blind deconvolution is not a technique which an ordinary user can stably and easily use. In the blind deconvolution, optical transfer function as well as deconvolution image are simultaneously estimated by an iteration method, so the amount of calculation is immense, and further the reliability of the calculation result is low.

Therefore, the blind deconvolution is effective only under a particular condition. The particular condition means, for example, a condition under which it can be assumed that, in the actual observation, as with a case where a clear image is restored from a blurred image of Hubble Telescope, point spread functions are measured from a celestial body image to the extent that the celestial body can be assumed to be an ideal point light source. In the case of general images, it is difficult to stably and easily use the blind deconvolution. Thus, the blind deconvolution is effective only when optical transfer functions cannot be evaluated and at the same time the nature of the original image is previously known to some extent. As with the present embodiment, the blind deconvolution is not suitable to a portable telephone apparatus 101 with camera capturing any given image.

Thus, according to the present embodiment, in the manufacturing stage of a portable telephone apparatus 101 with camera, optical transfer functions are measured and the optical transfer functions of the portable telephone apparatus 101 are preliminarily stored in an optical transfer function storage unit 117. Accordingly, when purchasing the portable telephone apparatus 101, the user can obtain along with imaging means for capturing an image the optical transfer functions of the imaging means.

When the imaging optical system 111 has a zooming function, a plurality of optical transfer functions corresponding to variation on zooming or focusing are stored in the optical transfer function storage unit 117. Also, in the case of color image, point spread function or MTF is measured with respect to each color of RGB. It is noted that point spread function generally varies according to the position in an image due to aberration etc. of the imaging optical system and the value of MTF evaluated with a test chart varies between the center and four corners of the imaging area. It is effective to divide the imaging area into a plurality of small areas and store the optical transfer function for each small area to thereby perform an image deconvolution processing for each small area. To calculate different point spread functions for each small area, point spread function may be defined as a function of position to perform interpolation.

The data file creating unit 118 reads based on a user instruction from the operating unit 116 an image specified by the user as the correction subject image from the image storage unit 114, and at the same time reads optical transfer functions from the optical transfer function storage unit 117. The data file creating unit 118 has a function of creating a data file in which images to be corrected and optical transfer functions are associated with each other. In the data file, optical transfer functions can be uniquely defined for a correction subject image; for example, two sets of data (a correction subject image and optical transfer functions) are changed into one archive file, or part of the names of the two data is shared.

The radio transmission/reception unit 119 has a function of wirelessly sending a data file created in the file creating unit 118 to the network 103 and transmitting the data file to the image correction server apparatus 102 via the network 103. The configuration for creating a data file and transmitting it to the image correction server apparatus 102 in this manner corresponds to the output means or transmission means of the present invention. It is noted that, in addition to the above described function, the portable telephone apparatus 101 has functions such as telephone communication by a not-shown configuration and Web browser.

The image correction server apparatus 102 includes a transmission/reception unit 121 and a deconvolution processing unit 122. The transmission/reception unit 121 has a function of receiving a data file transmitted from the portable telephone apparatus 101 and a function of sending back to the portable telephone apparatus 101 a corrected image obtained in the deconvolution processing unit 122. The transmission/reception unit 121 corresponds to the reception means and transmission means of the present invention. The deconvolution processing unit 122 has a function of using the optical transfer functions contained in a data file received by the transmission/reception unit 121 to apply a deconvolut ion processing to an image contained in the data file. The deconvolution processing unit 122 corresponds to the image correction means of the present invention.

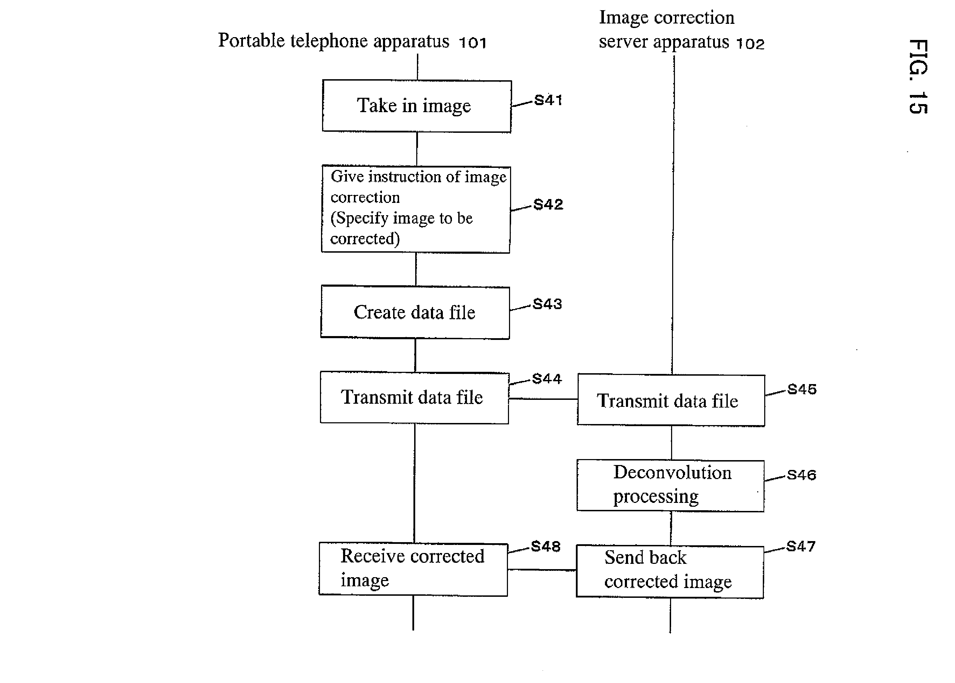

The operation of the image high-quality system 110 having the above described configuration will be described with reference to Figure 15. First, the two-dimensional image sensor 112 takes in light coming from an object through the imaging optical system 111, applies a photoelectric conversion to the taken-in light to output an electrical signal. The image processing unit 113 applies a processing to the electrical signal outputted from the two-dimensional image sensor 112 to create an image. The image created by the image processing unit 113 is stored in the image storage unit 114 (step S41). Then, the user manipulates the operating unit 116 and thereby specifies a correction subject image from among images stored in the image storage unit 114 and gives an instruction of image correction (step S42). The data file creating unit 118 reads the specified correction subject image from the image storage unit 114, reads optical transfer functions from the optical transfer function storage unit 117 and associates the two to create a data file (step S43).

Subsequently, the radio transmission/reception unit 119 transmits the data file created by the data file creating unit 118 to the image correction server apparatus 102 (step S44). The image correction server apparatus 102 receives the data file transmitted from the portable telephone apparatus 101 (step S45). The image correction server apparatus 102 applies a deconvolution processing to the correction subject image by use of the optical transfer functions contained in the data file (step S46).

The deconvolution processing in the image correction server apparatus 102 in step S46 will be described. First, the deconvolution processing unit 122 uses the following function as deconvolution processing restoration filter M (u, v).

[Formula 2]

$$M(u,v) = \frac{H^{*}(u,v)S_{ff}(u,v)}{S_{ff}(u,v)|H(u,v)|^{2} + S_{vv}(u,v)}$$

$$= \frac{1}{H(u,v)} \frac{|H(u,v)|^{2}}{|H(u,v)|^{2} + \left[S_{vv}(u,v)/S_{ff}(u,v)\right]}$$

In the above formula, H (u, v) is an optical transfer function; Sff is the spectrum density of an input signal; Svv (u, v) is noise spectrum density. The deconvolution processing unit 122 uses as this optical transfer function H (u, v) an optical transfer function contained in a data file transmitted from the portable telephone apparatus 101. The deconvolution processing unit 122 creates restoration filter M (u, v) for each image to which a deconvolution processing is to be applied, according to the noise characteristics of each image.

When the original image, degraded image and restored image are f (x, y), g (x, y) and f∧(x, y), respectively, and when the respective two-dimensional Fourier transforms are F (u, v), G (u, v) and F∧(u, v), respectively,

$$F\hat{}(u, v) = (H (u, v) * M (u, v)) * F (u, v),$$

and

$$F\hat{}(u, v) = M (u, v) * G (u, v)$$

where "*" denotes multiplication in frequency space. The deconvolution processing unit 122 uses as this degraded image g (x, y) a correction subject image contained in a data file transmitted from the portable telephone apparatus 101 with camera.

The deconvolution processing unit 122 performs a convolution integration of two-dimensional Fourier transform G (u, v) of the correction subject image with restoration filter M (u, v) to calculate Fourier transform F∧(u, v) of a corrected image, and performs inverse Fourier transform thereof to calculate restored image f∧(x, y). The deconvolution processing unit 122 outputs this restored image f∧(x, y) as a corrected image.

After the deconvolution processing unit 122 calculates the corrected image as described above, the transmission/reception unit 121 sends this corrected image back to the portable telephone apparatus 101 (step S47). The radio transmission/reception unit 119 of the portable telephone apparatus 101 receives the corrected image from the network 103 (step S48).

In the above described operation, after the user gives an instruction of image correction in step S42, the portable telephone apparatus 101 and image correction server apparatus 102 automatically perform the processings of steps S42 to S48. Accordingly, the user of the portable telephone apparatus 101 can obtain an operability equivalent to that obtained when a deconvolution processing is performed within the portable telephone apparatus 101. Since the image correction server apparatus 102 being actually an external apparatus is used, even when a deconvolution processing is applied to many images with a large number of pixels, an improved operation is possible.

According to such image correction system 110 of the seventh embodiment of the present invention, in order to correct an image obtained with the portable telephone apparatus 101 with camera, the portable telephone apparatus 101 transmits the correction subject image to the image correction server apparatus 102. The image correction server apparatus 102 performs a correction by a deconvolution processing, so it is not needed to arrange a configuration for performing a deconvolution processing within the portable telephone apparatus 101.

In the image correction system 110 of the seventh embodiment, when the portable telephone apparatus 101 transmits a correction subject image to the image correction server apparatus 102, this correction subject image and the optical transfer functions of the portable telephone apparatus 101 are associated with each other and transmitted. Accordingly, the image correction server apparatus 102 can easily obtain the optical transfer functions to be used in the deconvolution processing of the correction subject image. According to the present embodiment, in the manufacturing stage of the portable telephone apparatus 101 with camera, optical transfer functions are measured and the optical transfer functions of the portable telephone apparatus 101 are preliminarily stored in the optical transfer function storage unit 117. However, alternatively, the model number of the portable telephone apparatus 101 with camera or the information on zooming pattern etc. may be preliminarily stored in the optical transfer function storage unit 117 and then the optical transfer functions may be selected based on these pieces of information.

(Eighth Embodiment)

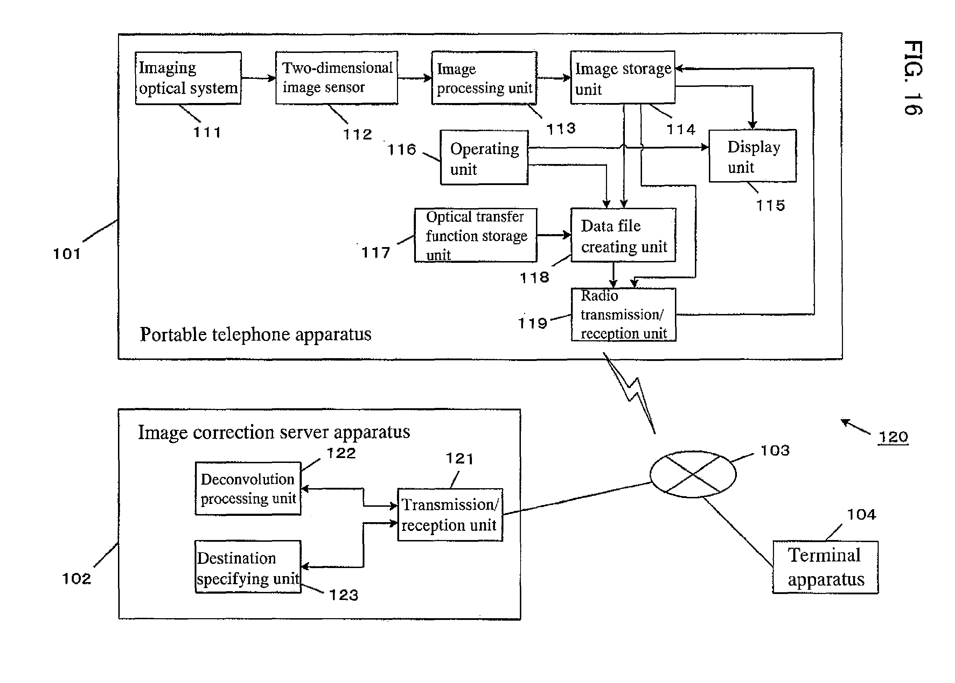

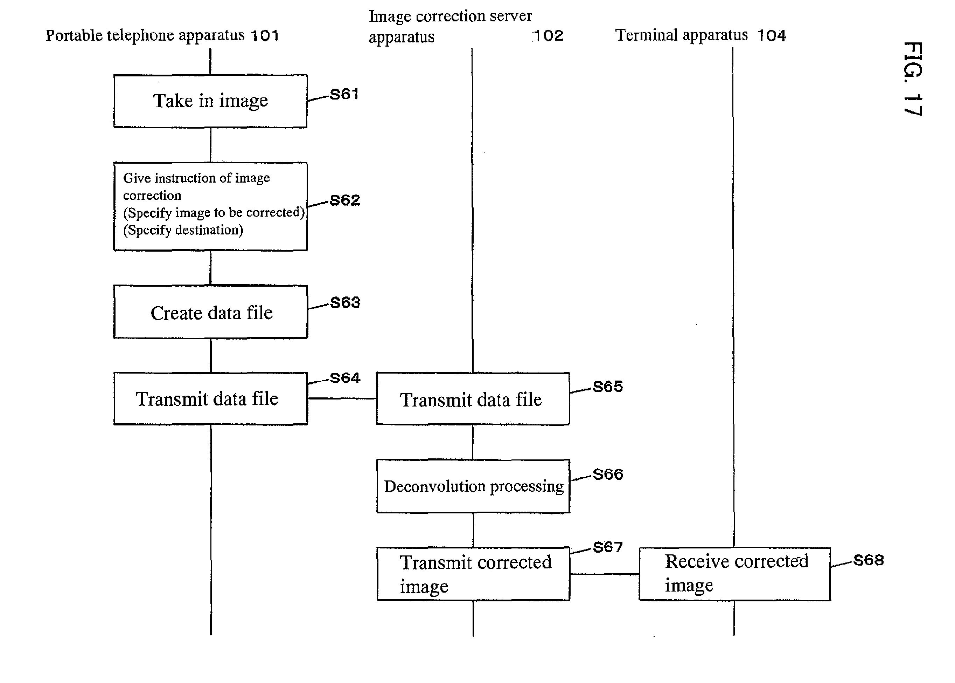

An eighth embodiment of the present invention will be described with reference to Figures 16 and 17. Figure 16 is a view showing an image correction system according to the present embodiment. Referring to Figure 16, an image high-quality system 120 includes a portable telephone apparatus 101 with camera, an image correction server apparatus 102 and a terminal apparatus 104 communicable with each other via a network 103.

The configuration of the portable telephone apparatus 101 is similar to that of the seventh embodiment. It is noted that, in addition to optical transfer functions, the data file creating unit 118 further creates a data file obtained by associating information (transmission destination information) indicating the transmission destination of a corrected image inputted from the operating unit 116 with the correction subject image. More specifically, the data file creating unit 118 according to the present embodiment creates a data file containing a correction subject image, optical transfer functions and information on corrected-image transmission destination. As the corrected-image transmission destination, a plurality of transmission destinations can be specified.

As with the seventh embodiment, the image correction server apparatus 102 includes a transmission/reception unit 121 and a deconvolution processing unit 122. The transmission/reception unit 121 and deconvolution processing unit 122 have functions similar to those of the seventh embodiment. The image correction server apparatus 102 according to the present embodiment further includes a destination specifying unit 123. The destination specifying unit 123 has a function of specifying as the transmission destination of data transmission by the transmission/reception unit 121 a transmission destination indicated in the transmission destination information contained in the data file. The terminal apparatus 104 has a function of receiving a corrected image transmitted from the image correction server apparatus 102 and displaying the corrected image.

The operation of the image high-quality system 120 having the above described configuration will be described with reference to Figure 17. First, as with the seventh embodiment, the portable telephone apparatus 101 with camera takes in an object image (step S61). Subsequently, the portable telephone apparatus 101 with camera accepts an instruction of image correction from the operating unit 116 (step S62). The operating unit 116 accepts specifying of a corrected-image transmission destination along with specifying of a correction subject image. The data file creating unit 118 creates a data file obtained by associating the correction subject image, the optical transfer functions and the transmission destination information indicating the transmission destination accepted in step S62 (step S63). The radio transmission/reception unit 119 transmits the data file to the image correction server apparatus 102 (step S64). The operation of specifying a correction subject image in step S62 may be replaced with an operation of specifying an image to be transmitted; accordingly, the processing of step S63 and subsequent processings can be performed without causing the user to be conscious of image correction.

In the image correction server apparatus 102, as with the seventh embodiment, the data file is transmitted by the transmission/reception unit 121 (step S65). The deconvolution processing unit 122 uses the optical transfer functions contained in the data file to apply a deconvolution processing to the correction subject image (step S66). After the deconvolution proces sing unit 122 creates a corrected image, the destination specifying unit 123 specifies a transmission destination indicated in the transmission destination information contained in the data file received from the portable telephone apparatus 101 with camera. The transmission/reception unit 121 transmits the corrected image (step S67). The terminal apparatus 104 specified as the transmission destination receives the corrected image via the network 103 (step S68).

According to such image correction system 120 of the eighth embodiment of the present invention, also, as with the image correction system 110 of the seventh embodiment, in order to correct an image obtained with the portable telephone apparatus 101 with camera, a correction subject image is transmitted from the portable telephone apparatus 101, and a correction is performed by a deconvolution processing in the image correction server apparatus 102. Consequently, the portable telephone apparatus 101 needs not to include a configuration for performing the deconvolution processing.

In the image correction system 120, when the portable telephone apparatus 101 transmits a correction subject image to the image correction server apparatus 102, the correction subject image and the optical transfer functions of the portable telephone apparatus 101 are associated with each other and transmitted. Accordingly, the image correction server apparatus 102 can readily obtain the optical transfer functions to be used in the deconvolution processing of the correction subject image.

The image correction server apparatus 102 transmits a corrected image directly to the terminal apparatus 104. Accordingly, compared to when, after a corrected image is sent from the image correction server apparatus 102 back to the portable telephone apparatus 101, the corrected image is further transmitted from the portable telephone apparatus 101 to the terminal apparatus 104, an advantage is obtained in that the traffic between the portable telephone apparatus 101 and image correction server apparatus 102 can be reduced.


(Ninth Embodiment)

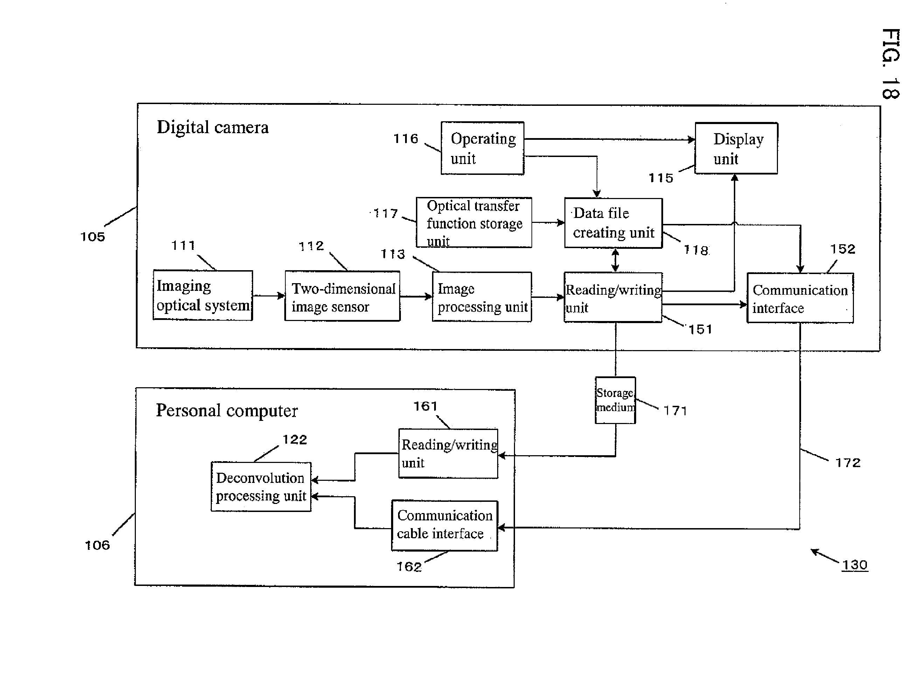

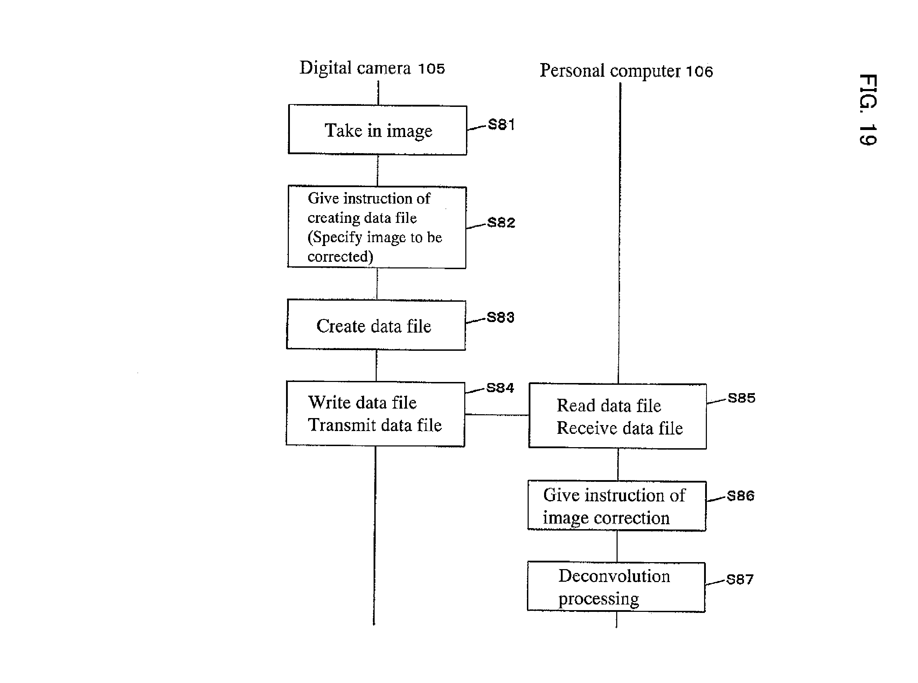

A ninth embodiment of the present invention will now be described with reference to Figures 18 and 19. Figure 18 is a view showing an image correction system according to the present embodiment. Referring to Figure 18, the image correction system 130 includes a digital camera 105 and a personal computer 106 communicable with each other via a network.

Similarly to the portable telephone apparatus 101 according to the seventh and eighth embodiments, the digital camera 105 includes an imaging optical system 111, a two-dimensional image sensor 112, an image processing unit 113, a display unit 115, an operating unit 116, an optical transfer function storage unit 117 and a data file creating unit 118. These functions are similar to those of the seventh embodiment. The digital camera 105 corresponds to the digital imaging device of the present invention. The digital camera 105 further includes a reading/writing unit 151 and a communication interface 152.

The reading/writing unit 151 has a function of writing data into a recording medium 171, such as a flash memory card, and a function of reading data from the recording medium 171. The communication interface 152 is a USB (Universal Serial Bus) interface. The communication interface has a function of transmitting/receiving data to/from an external apparatus via a USB cable 172.

According to the present embodiment, the reading/writing unit 151 writes an image generated by the image processing unit 113 into the recording medium 171. The data file creating unit 118 has a function of taking in an image read from the recording medium 171 by the reading/writing unit 151. The communication interface 152 has a function of transmitting to an external apparatus the image read from the recording medium 171 by the reading/writing unit 151. The reading/writing unit 151 has a function of taking in a data file from the data file creating unit 118 and writing it into the recording medium 171; this function corresponds to the output means of the present invention. Further, the communication interface 152 has a function of taking in a data file from the data file creating unit 118 and transmitting it; this function corresponds to the output means or transmission means of the present invention.

The personal computer 106 includes a reading/writing unit 161, a communication interface 162 and a deconvolution processing unit 122. The function of the deconvolution processing unit 122 is the same as that of the seventh embodiment. The reading/writing unit 161 and communication interface 162 has the same functions as those of the reading/writing unit 151 and communication interface 152 of the digital camera 105. In the personal computer 106, the deconvolution processing unit 122 is implemented by executing a program inputted from the reading/writing unit 161 or communication interface 162 on an operating system.

The operation of the image correction system 130 having the above described configuration will be described with reference to Figure 19. First, similarly to the portable telephone apparatus 101 according to the seventh embodiment, the digital camera 105 captures an image of an object and takes in the captured image (step S81). The operating unit 116 accepts an instruction of creating a data file (step S82). In this operation similar to that (step S42 of Figure 15) of accepting an instruction of image correction in the seventh embodiment, a correction subject image is specified.

When the instruction of creating a data file involving specifying of a correction subject image is inputted via the operating unit 116, the data file creating unit 118 reads the specified image from the recording medium 171 into the reading/writing unit 151 and thereby takes in the specified image. The data file creating unit 118 takes in optical transfer functions from the optical transfer function storage unit 117, associates the specified image with the optical transfer functions and thereby creates a data file (step S83) . The reading/writing unit 151 writes the data file created by the data file creating unit 118 to the recording medium 171. The communication interface 152 transmits the data file via the USB cable 172 (step S84).

In the personal computer 106, the data file is read from the recording medium 171 by the reading/writing unit 161, or received by the communication interface 162 via the USB cable 172 (step S85). When an instruction of image correction is inputted from the user (step S86), the deconvolution processing unit 122 uses the optical transfer functions contained in the data file to apply a deconvolution processing to the correction subject image (step S87) and creates a corrected image.

According to such image correction system 130 of the ninth embodiment of the present invention, also, as with the image correction system 110 of the seventh embodiment, in order to correct an image obtained with the digital camera 105, a correction subject image is written into the recording medium 171, or transmitted to the communication cable 172, and the image correction server apparatus 102 applies a deconvolution processing to the correction subject image. Consequently, a configuration for performing a deconvolution processing needs not to be arranged within the digital camera 105.

In the image correction system 130 of the ninth embodiment, when the digital camera 105 transmits a correction subject image to the personal computer 106, the correction subject image and the optical transfer functions of the digital camera 105 are associated with each other and outputted. Consequently, the personal computer 106 can readily obtain the optical transfer functions to be used in the deconvolution processing of the correction subject image.

In the above description, an example in which the portable telephone apparatus 101 and digital camera 105 associates optical transfer functions with a correction subject image and transmits them. Point spread functions may be preliminarily stored in the portable telephone apparatus 101 and digital camera 105, and the portable telephone apparatus 101 and digital camera 105 may associate the point spread functions with a correction subject image and transmit them. An optical transfer function is obtained by performing an inverse transform of two-dimensional Fourier transform of a point spread function; these two functions have a mutual conversion relationship. Both the optical transfer function and point spread function correspond to the degradation factor information of the present invention.

The portable telephone apparatus 101 of the seventh and eighth embodiments may be a digital camera with communication function having a camera function as the main function. The digital camera 105 of the ninth embodiment may be a portable telephone apparatus with camera having a function of writing images into a recording medium, or a portable telephone apparatus with camera having a function of outputting images to a personal computer via a USB cable.

Industrial Applicability

As described above, according to the measuring method for optical transfer function of the present invention, the optical transfer functions of an imaging camera are calculated with the imaging optical system and image sensor integrated with each other. Consequently, an advantage is obtained in which an optical transfer functions reflecting image degradation factor occurring due to the imaging optical system actually disposed in the imaging camera and image degradation factor ascribable to element crosstalk of the image sensor can be calculated and at the same time the optical transfer functions can easily be calculated without disassembling the imaging camera. The present invention is useful as a method for measuring the optical transfer functions of a miniaturized or thickness-reduced imaging camera or the like mounted on a portable telephone apparatus.

In the image correction method according to the present invention, the digital imaging device associates with an image generated by imaging means, degradation factor information for correcting the image degraded due to the imaging means and outputs the degradation factor information, and a deconvolution processing is performed in the image correction server apparatus. Consequently, an advantage is obtained in that a corrected image obtained by performing a deconvolution processing is obtained without increasing the processing load of the digital imaging device. The present invention is useful as a method for correcting an image obtained by image-capturing in a portable telephone apparatus etc. with camera.

**Claims**

1. A measuring method for optical transfer function, comprising:

   a scanning step of irradiating irradiating-light from a light source and allowing the irradiating-light to scan an element to be measured, wherein the element to be measured is an element within an image sensor of an imaging camera constituted by integrating an imaging optical system and the image sensor;
   a photoelectric conversion step of converting sequentially the irradiating-light into an electrical signal by the element to be measured along with scanning of the element in the scanning step and then outputting the electrical signal; and
   a calculation step of calculating an optical transfer function based on the electrical signals outputted in the photoelectric conversion step, wherein the optical transfer function is used to perform a restoration for degradation of an image generated by use of the imaging camera by a deconvolution processing.

2. The measuring method for optical transfer function according to claim 1, wherein in the calculation step, the optical transfer function of the elements to be measured is calculated based on the spread function data which is generated with scanning by the irradiating-light in the scanning step and which indicates a distribution of the electrical signal obtained by performing conversion in the elements to be measured.

3. The measuring method for optical transfer function according to claim 2, wherein:

   in the scanning step, the irradiating-light producing a point-like projection image on an imaging area is irradiated under a conjugation condition such that the diameter of a paraxial image of the irradiating-light on the imaging area is equal to or smaller than half a pitch of the element; and
   in the calculation step, the optical transfer function is calculated based on the point spread function data which is generated as the spread function data.

4. The measuring method for optical transfer function according to claim 2, wherein:

   in the scanning step, the irradiating-light producing a linear projection image on an imaging area is irradiated under a conjugation condition such that the width of a paraxial image of the irradiating-light on the imaging area is equal to or smaller than half a pitch of the element; and
   in the calculation step, the optical transfer function is calculated based on the line spread function data which is generated as the spread function data.

5. The measuring method for optical transfer function according to any one of claims 1 to 4, wherein:

   in the scanning step, the irradiating-light scans a plurality of the elements to be measured; and
   the calculation step comprises a processing of performing an interpolation by using the optical transfer functions of a plurality of the elements to be measured and thereby calculating an optical transfer function of an element other than the elements to be measured.

6. The measuring method for optical transfer function according to any one of claims 2 to 5, further comprising a distortion characteristic data generation step generating distortion characteristic data relating to image distortion on the imaging area by using the spread function data and position information of the element to be measured corresponding to the spread function data.

7. The measuring method for optical transfer function according to claim 1, wherein the scanning step comprises a step of changing at least one of irradiating angle and irradiating position of the irradiating-light in the imaging camera so that the irradiating-light scans the element to be measured.

8. The measuring method for optical transfer function according to claim 1, wherein the scanning step comprises a step of changing at least one of angle and position of the imaging camera so that the irradiating-light scans the element to be measured.

9. An image restoring method, comprising:

measuring an optical transfer function by a measuring method according to any one of claims 1 to 8; and applying a restoration processing to image data obtained by the imaging camera by use of the measured optical transfer function.

10. A portable telephone apparatus, comprising:

an imaging camera capturing an image of an object and generating image data;
storage means for storing an optical transfer function; and,
transmission means for transmitting as a set of data the optical transfer function stored in the storage means and the image data generated by the imaging camera;
wherein the optical transfer function is measured by a measuring method comprising:

a scanning step of irradiating irradiating-light from a light source, and allowing the irradiating-light to scan an element to be measured within an image sensor of the imaging camera, wherein the image sensor of the imaging camera is integrated with an imaging optical system;
a photoelectric conversion step of converting sequentially the irradiating-light performing scanning in the scanning step into an electrical signal by the element to be measured and then outputting the electrical signal; and
a calculation step of calculating the optical transfer function based on the electrical signals outputted in the photoelectric conversion step, wherein the optical transfer function is used to perform a restoration for degradation of an image generated by the imaging camera by a deconvolution processing.

11. A digital imaging device, comprising:

an imaging camera capturing an image of an object and generating image data;
storage means for storing an optical transfer function; and,
transmission means for transmitting as a set of data the optical transfer function stored in the storage means and the image data generated by the imaging camera;
wherein the optical transfer function is measured by a measuring method comprising:

a scanning step of irradiating irradiating-light from a light source, and allowing the irradiating-light to scan an element to be measured within an image sensor of the imaging camera, wherein the image sensor of the imaging camera is integrated with an imaging optical system;
a photoelectric conversion step of converting sequentially the irradiating-light performing scanning in the scanning step into an electrical signal by the element to be measured and then outputting the electrical signal; and
a calculation step of calculating the optical transfer function based on the electrical signals outputted in the photoelectric conversion step, wherein the optical transfer function is used to perform a restoration for degradation of an image generated by the imaging camera by a deconvolution processing.

12. A portable telephone apparatus, comprising:

an imaging camera capturing an image of an object and generating image data;
tag generation means for attaching to the image data generated by the imaging camera a file number of a data file containing an optical transfer functionmeasured by a measuring method comprising:

a scanning step of irradiating irradiating-light from a light source, and allowing the irradiating-light to scan an element to be measured within an image sensor of the imaging camera, wherein the image sensor of the imaging camera is integrated with an imaging optical system;

a photoelectric conversion step of converting sequentially the irradiating-light scanning the element in the scanning step into an electrical signal by the element to be measured and then outputting the electrical signal; and

a calculation step of calculating an optical transfer function based on the electrical signal outputted in the photoelectric conversion step, wherein the optical transfer function is used to perform a restoration for degradation of an image generated by the imaging camera by a deconvolution processing.

**13.** A digital imaging device, comprising:

an imaging camera capturing an image of an object and generating image data;

tag generation means for attaching to the image data generated by the imaging camera a file number of a data file containing an optical transfer function measured by a measuring method comprising:

a scanning step of irradiating irradiating-light from a light source, and allowing the irradiating-light to scan an element to be measured within an image sensor of the imaging camera, wherein the image sensor of the imaging camera is integrated with an imaging optical system;

a photoelectric conversion step of converting sequentially the irradiating-light scanning the element in the scanning step into an electrical signal by the element to be measured and then outputting the electrical signal; and

a calculation step of calculating an optical transfer function based on the electrical signal outputted in the photoelectric conversion step, wherein the optical transfer function is used to perform a restoration for degradation of an image generated by the imaging camera by a deconvolution processing.

**14.** An image correction method, comprising the steps of:

associating an image generated by causing a digital imaging device to perform image-capturing of an object with degradation factor information for correcting the image degraded due to imaging means of the digital imaging device, and outputting the associated information from the digital imaging device; and

causing an image correction server apparatus to apply a deconvolution processing to the image outputted from the digital imaging device by use of the degradation factor information associated with the image.

**15.** A digital imaging device, comprising:

imaging means for capturing and generating an image of an object;

degradation factor information storage means for storing degradation factor information for correcting the image degraded due to the imaging means; and

output means for outputting the degradation factor information associated with the image.

**16.** The digital imaging device according to claim 15, further comprising receiving means for receiving a corrected image obtained by correcting the image using the degradation factor information outputted from the output means.

**17.** The digital imaging device according to claim 15 or 16, wherein the degradation factor information storage means stores as the degradation factor information an optical transfer function used in a deconvolution processing.

**18.** The digital imaging device according to any one of claims 15 to 17, wherein the output means is transmission means for transmitting the degradation factor information associated with the image.

**19.** The digital imaging device according to any one of claims 15 to 17, wherein the output means is writing means for writing the degradation factor information associated with the image into a recording medium associated with the image.

**20.** An image correction server apparatus, comprising:

receiving means for receiving from a digital imaging device an image generated by causing the digital imaging device to perform image-capturing of an object and degradation factor information for correcting the image degraded due to imaging means of the digital imaging device;
image correction means for applying a deconvolution processing to the image using the degradation factor information; and
transmission means for transmitting a corrected image obtained by performing the deconvolution processing.

**21.** The image correction server apparatus according to claim 20, wherein:

the receiving means receives transmission destination information specifying a transmission destination of the corrected image together with the image and the degradation factor information;
the transmission means transmits the corrected image to a transmission destination specified by the transmission destination information.

**22.** An image correction system comprising a digital imaging device and an image correction server apparatus, wherein:

the digital imaging device comprises imaging means for capturing and generating an image of an object, specifying means for specifying a transmission destination of a corrected image, and transmission means for transmitting destination information associated with the image generated by the imaging means to the image correction server apparatus, wherein the transmission destination information indicates the transmission destination specified by use of the specifying means and transmitting the associated information; and
the image correction server apparatus comprises image correction means for applying a deconvolution processing to the image outputted from the digital imaging device to obtain the corrected image and transmission means for transmitting the corrected image obtained by use of the image correction means to a transmission destination indicated by the transmission destination information associated with the image.

**23.** A program for allowing a computer to execute an image correction method, comprising:

a step of accepting input of a data file containing an image generated by causing a digital imaging device to perform image-capturing of an object and degradation factor information for correcting the image degraded due to imaging means of the digital imaging device; and
an image correction step of applying a deconvolution processing to the image contained in the data file outputted from the digital imaging device by using the degradation factor information contained in the data file with the image.

FIG. 1

FIG. 2

FIG. 3

FIG. 4

Intensity

Y

X

Angle-position

FIG. 5

M T F

X

Y

Spatial frequency

Phase

X

Y

FIG. 6

EP 1 708 136 A1

FIG. 7

FIG. 8

FIG. 9

FIG. 10

## FIG. 11

FIG. 12

FIG. 13

FIG. 14

EP 1 708 136 A1

Optical transfer function

Spatial frequency (arbitrary unit)

FIG. 15

EP 1 708 136 A1

Portable telephone apparatus 101

Image correction
server apparatus 102

Take in image — S41

Give instruction of image correction
(Specify image to be corrected) — S42

Create data file — S43

Transmit data file — S44

Transmit data file — S45

Deconvolution processing — S46

Receive corrected image — S48

Send back corrected image — S47

FIG. 16

EP 1 708 136 A1

Portable telephone apparatus

- Imaging optical system — 111
- Two-dimensional image sensor — 112
- Image processing unit — 113
- Image storage unit — 114
- Operating unit — 116
- Display unit — 115
- Optical transfer function storage unit — 117
- Data file creating unit — 118
- Radio transmission/reception unit — 119

101

Image correction server apparatus

- Deconvolution processing unit — 122
- Transmission/reception unit — 121
- Destination specifying unit — 123

102

103

120

Terminal apparatus — 104

FIG. 17

EP 1 708 136 A1

Portable telephone apparatus 101

Image correction server
apparatus                                      102

Terminal apparatus 104

Take in image — S61

Give instruction of image
correction
(Specify image to be corrected)
(Specify destination) — S62

Create data file — S63

Transmit data file — S64

Transmit data file — S65

Deconvolution processing — S66

Transmit corrected
image — S67

Receive corrected
image — S68

FIG. 18

EP 1 708 136 A1

**Digital camera** 105

116 Operating unit

Display unit 115

117 Optical transfer function storage unit → Data file creating unit 118

111 Imaging optical system → 112 Two-dimensional image sensor → 113 Image processing unit → Reading/writing unit 151

152 Communication interface

Storage medium 171

**Personal computer** 106

161 Reading/writing unit

122 Deconvolution processing unit

162 Communication cable interface

172

130

# FIG. 19

Digital camera 105

S81 Take in image

S82 Give instruction of creating data file (Specify image to be corrected)

S83 Create data file

S84 Write data file Transmit data file

Personal computer 106

S85 Read data file Receive data file

S86 Give instruction of image correction

S87 Deconvolution processing

## INTERNATIONAL SEARCH REPORT

| | International application No. |
|---|---|
| | PCT/JP2005/000289 |

**A. CLASSIFICATION OF SUBJECT MATTER**
Int.Cl⁷ H04N5/232, G06T3/00, H04N5/225//H04N101:00

According to International Patent Classification (IPC) or to both national classification and IPC

**B. FIELDS SEARCHED**

Minimum documentation searched (classification system followed by classification symbols)
Int.Cl⁷ H04N5/232, G06T3/00, H04N5/225

Documentation searched other than minimum documentation to the extent that such documents are included in the fields searched
Jitsuyo Shinan Koho          1922-1996     Jitsuyo Shinan Toroku Koho     1996-2005
Kokai Jitsuyo Shinan Koho    1971-2005     Toroku Jitsuyo Shinan Koho     1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 99/67743 A1 (Yoshikazu ICHIYAMA), | 14-23 |
| A | 29 December, 1999 (29.12.99), | 1-13 |
| | Page 11, line 23 to page 131, line 1; | |
| | Figs. 10, 11 | |
| | (Family: none) | |
| A | JP 11-205652 A (Yoshikazu ICHIKAWA), | 1-23 |
| | 30 July, 1999 (30.07.99), | |
| | Full text; Figs. 1 to 7 | |
| | (Family: none) | |
| A | JP 2002-24816 A (Yokokawa Denki Kabushiki Kaisha), | 1-23 |
| | 25 January, 2002 (25.01.02), | |
| | Full text; Figs. 1 to 10 | |
| | (Family: none) | |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 May, 2005 (12.05.05) | 31 May, 2005 (31.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2005/000289 |

C (Continuation).    DOCUMENTS CONSIDERED TO BE RELEVANT

| Category* | Citation of document, with indication, where appropriate, of the relevant passages | Relevant to claim No. |
| --- | --- | --- |
| P,A | JP 2004-328506 A  (Sony Corp.),<br>18 November, 2004 (18.11.04),<br>Full text; Figs. 1 to 20<br>(Family: none) | 1-23 |

Form PCT/ISA/210 (continuation of second sheet) (January 2004)

## INTERNATIONAL SEARCH REPORT

| International application No. |
|---|
| PCT/JP2005/000289 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:

   I. Claims 1-13 relate to a measuring method for optical transfer function characterized by comprising the scanning step of emitting an irradiation light from a light source and scanning the irradiation light on an element to be measured out of imaging elements of an imaging camera in which an imaging optical system and the imaging elements are formed integrally, the photoelectric conversion step of sequentially converting the irradiation light into electrical signals at the element to be measured and outputting the electrical signals as the result of the scanning of the element to be measured in the above scanning step,          (Continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest.

☒ No protest accompanied the payment of additional search fees.

Form PCT/ISA/210 (continuation of first sheet (2)) (January 2004)

| **INTERNATIONAL SEARCH REPORT** | International application No. |
|---|---|
| | PCT/JP2005/000289 |

<u>Continuation of Box No.III of continuation of first sheet(2)</u>

and the computing step of computing optical transfer function used for restoring the deterioration of an image generated by the imaging camera based on the output electrical signals in the photoelectric conversion step by a deconvolution processing.

II. Claims 14-21, 23 relate to a image correcting method characterized by comprising the step of correlating am image produced by imaging an object by a digital imaging device with deterioration cause information for correcting the image deteriorated due to the imaging means of the digital imaging device, for outputting from the digital imaging device, and the step of deconvolution-processing, at an image correction server device, the image output from the digital imaging device by using the deterioration cause information correlated with the image.

III. Claim 22 relates to an image correction system having a digital imaging device and an image correction server device, characterized in that the digital imaging device comprises an imaging means for generating an image by imaging an object, a means for designating the transmission destination of a corrected image, and a transmitting means for correlating the image generated by the imaging means with transmission destination information indicating a transmission destination designated by the designating means, for transmitting to the image correction server device, while the image correction server device comprises an image correcting means for deconvolution-processing the image output from the digital imaging device to obtain the corrected image, and means for transmitting the corrected image obtained by the image correcting means to a transmission destination indicated by the transmission destination information correlated with the image.

These three invention groups are not considered to be a group of inventions so linked as to form a single general inventive concept.

Form PCT/ISA/210 (extra sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002024816 A
- JP 2000206446 A